# EUROPEAN PATENT APPLICATION

(11) **EP 1 311 121 A1**
(43) Date of publication of application: **14.05.2003**
(21) Application number: 01941248.5
(22) Date of filing: 26.06.2001
(51) Int. Cl.: H04N 5/91

(54) **EDIT APPARATUS, REPRODUCTION APPARATUS, EDIT METHOD, REPRODUCTION METHOD, EDIT PROGRAM, REPRODUCTION PROGRAM, AND DIGITAL RECORD MEDIUM**

(30) Priority: 26.06.2000 JP 2000191206
(71) Applicant: MATSUSHITA ELECTRIC INDUSTRIAL CO., LTD., Kadoma-shi, Osaka 571-8501 (JP)
(72) Inventor: ASADA, Shin, Neyagawa-shi, Osaka 531-0055 (JP); HATAE, Eiichi, Fukuoka-shi, Fukuoka 819-0015 (JP); SASAKI, Shinji, Osaka-shi, Osaka 533-0013 (JP)
(74) Representative: Grünecker, Kinkeldey, Stockmair & Schwanhäusser Anwaltssozietät
(86) International application number: JP0105449
(87) International publication number: WO02001868

(57) **Abstract**

An editing apparatus edits management information including a reproduction procedure of a video stream having sets of picture data. A reproducing apparatus reproduces the video stream based on the management information. The video stream and the management information are prerecorded on a digital recording medium. In the editing apparatus, receiving unit receives user edit information specifying a part to be edited in the reproduction procedure. Generating unit generates a new reproduction procedure by editing the specified part, generating new management information. Attaching unit attaches entry information marking the new reproduction procedure at which editing was performed according to the user's intention, to the new management information. Recording unit records the new management information with the entry information onto the digital recording medium. In the reproduction apparatus, collecting unit collects section information featuring each section separated by the entry information. Display unit displays the collected section information for the user.

## Description

### Technical Field

The present invention relates to a technique for editing video data recorded on a randomly accessible recording medium such as an optical disc, and to a technique for reproducing the recorded video data. The present invention also relates to a recording medium on which the edited video data is recorded.

### Background Art

In recent years, disc media that allow random access, such as DVD-RAM (Digital Versatile Disc - Random Access Memory) discs have increasingly been used as recording media for video data, taking the place of conventionally employed tape media.

Conventional video editing using tape media typically involves cutting and linking of the tape media . Once edited, therefore, the original video data is destroyed. On the other hand, video editing using disc media creates another reproduction procedure, without the original data being destroyed. This enables video editing to be performed again and again. Such video editing that does not destroy recorded video data is hereafter referred to as "non-destructive video editing".

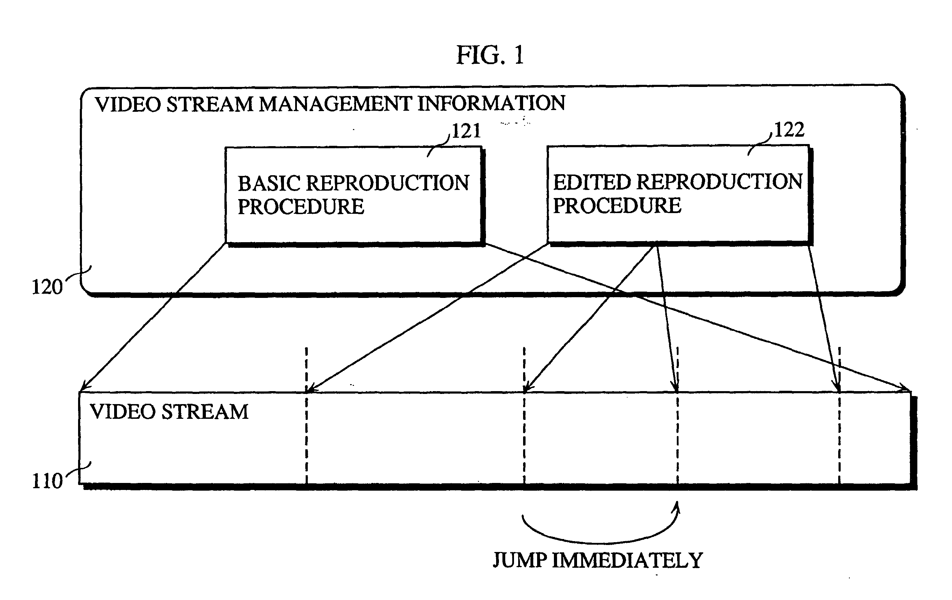

FIG. 1 schematically shows various data recorded on a disc medium on which non-destructive video editing has been performed.

As shown in FIG. 1, a video stream 110 and video stream management information 120 are recorded on the disc medium on which non-destructive video editing has been performed. The video stream 110 is consecutive video data. The video stream management information 120 indicates a reproduction procedure of the video stream.

The video stream management information 120 includes a basic reproduction procedure 121 and an edited reproduction procedure 122.

The basic reproduction procedure 121 is recorded in advance, before non-destructive video editing is performed, and indicates to reproduce the video stream 110 consecutively from the start to the end.

The edited reproduction procedure 122 is newly recorded as a result of non-destructive video editing, and indicates to partially reproduce the video stream 110.

To reproduce the video stream 110, the user selects one of the basic reproduction procedure 121 and the edited reproduction procedure 122. Due to this, both pre-edited video and edited video can be played back.

Japanese Laid-Open Patent Application No. H11-187354 discloses one example of non-destructive video editing.

The following defines main technical terms used in this specification.

"Cell (C)" is data structure to represent a portion of a Program. A Cell in Original PGC (Program Chain) is called as Original Cell and a Cell in a User Defined PGC is called as User Defined Cell. A Program in the Program Set consists of one or more Original Cell. A Part of Program in a Play List consists of one or more User Defined Cells. Two types of Cells are defined each for Movie VOB and Still Picture VOB. When a Cell type is for Movie VOB, the Cell shall only refer to whole or a part of a Movie VOB. When a Cell type is for Still Picture VOB, the Cell shall only refer to whole or a part of Still Picture VOB Group.

"Entry Point (EP)" is a position to enter within a Program in case of Original PGC or a position to enter within a Part of Program in case of User Defined PGC.

"Movie Cell (M_C)" is a Cell which is pointing to a Movie VOB.

"Movie Cell Entry Point (M_C_EP)" is Entry Point, which is pointed within a Movie Cell. Each Entry Point is specified by presentation time (PTM).

"Movie VOB (M_VOB)" is the presentation data for moving pictures. This VOB consists of Video data, Audio data, Sub-picture data and Real-time Data Information.

"Original Cell" is a Cell which belongs to the Original PGC.

"Original PGC (ORG_PGC)" represents the Program Set which is a chain of Programs, and includes stream data stored in VRO files.

"Part of Program" is a sub-unit of recorded contents within a Program. A Part of Program is a consecutive part of a Program which is specified by user. This abstraction is used only to define the Play List itself, so there is no data structure directly representing Part of Program.

"Play List (PL)" is a list of Part of Program and allows user to define any playback sequences. A Play List is defined as a User Defined PGC.

"Presentation Data" is stream data which consists of video data coded with ISO/IEC 13818-2 or ISO/IEC 11172, audio data coded with ISO/IEC 13818-3 , ISO/IEC 11172-3, Dolby AC-3 or Linear PCM, Sub-picture data coded with run-length compression and Real-time Data Information.

"Program (PG)" is a logical unit of recorded contents, which are recognized or defined by user. A Program in the Program Set consists of one or more Original Cells . Program is defined only in the Original PGC.

"Program Chain (PGC)" is a generic conceptual unit to represent a chain of Programs (Original PGC) which corresponds to the Program Set and a chain of Part of Programs (User Defined PGC) which corresponds to a Play List. The total presentation of a PGC is described as a presentation sequence of Cells defined in the Program Chain Information (PGCI).

"Program Chain Information (PGCI)" is a data structure to represent a total presentation of a PGC. PGCI is used for both the Original PGC and a User defined PGC. User Defined PGC has only PGCI and the Cells in the PGCI refer to VOBs in the Original PGC.

"Program Set" is the entire recorded contents of a disc which consist of all the Programs. When the Program Set is played back, the presentation order of Programs becomes the same as the recorded order of Programs, unless any Programs have been edited so as to change the presentation order of from the original recording. The Program Set corresponds to the data structure named Original PGC.

"Still Picture Cell(S_C)" is a Cell which is pointing to a Still Picture VOB Group.

"Still Picture Cell Entry Point" is Entry Point, which is pointed within a Still Picture Cell. Each Entry Point is specified by Still Picture VOB Entry number (S_VOB_ENTN).

"Still Picture VOB (S_VOB)" is the presentation data for a still picture. A Still Picture VOB corresponds to a VOBU. This VOB consists of a Video part including an optional Sub-picture unit and an optional Audio part. The Video part includes a Still picture data, which is made by an I-picture of MPEG video data. The Audio part includes plural audio frames associated with Video part. In addition, a Still Picture VOB may have the Real-time Data Information and an Additional Audio part which is used for after recording.

"Still Picture VOB Group (S_VOB)" is a group which is gathered to manage one or more Still Picture VOBs as having same attributes.

"User Defined Cell" is a Cell which belongs to a User Defined PGC, and it corresponds to a Part of Program.

"User Defined PGC (UD_PGC)" is a chain of Part of Programs. It contains only Navigation data and each Part of Program refers to stream data belonging to the Original PGC. Therefore, creating or deleting a User Defined PGC does not affect the Original PGC at all.

"Video Object (VOB)" is stream data, which are originated in one real time recording and belong to the Original PGC. The data structure of VOB complies with Program Stream prescribed in "Information Technology-Generic coding of moving pictures and associated audio: Systems (ISO/IEC 13818-1)". There are two types of VOBs, Movie VOB and Still Picture VOB . The Movie VOB includes Video data for moving pictures, and the Still Picture VOB includes Video data for a still picture. A Movie VOB consists of one or more Video Object Units (VOBUs), which compose of Video data, Audio data, Sub-picture data and Real-time Date Information. A Still Picture VOB consists of a VOBU, which compose of Video part including a Sub-picture unit data, Audio part and Real-time Date Information.

"Video Object Unit (VOBU)" is a basic unit of a VOB which consists of one or more GOPs of Video data. It has a presentation time between 0.4 seconds and 1.0 second except for the last VOBU in a Movie VOB. The last VOBU of a Movie VOB may have a presentation time less than 0.4 seconds. In case of Still Picture VOB, a VOB contains only one video picture, and the whole VOB becomes a VOBU. VOBU consists of integer number of LBs and starts with Video pack or Real-time Data Information pack (RDI_PCK).

"UD_PGCI" is User_Defined PGC Information.

"Time Map (TMAP)" is a data table used to convert from a given presentation time inside a Movie VOB to the address of a VOBU, inside the VOB, of which presentation period matches to the specified presentation time.

"Type A" data structure is used when no Primary Text Information exists.

"Type B" data structure is used when Primary Text Information exists.

"EP_TY" describes EP Type of this Entry Point.

"EP_PTM" describes the PTM for this Entry Point.

"PRM_TXTI" describes the Primary Text Information for this Entry Point.

When the Presentation Time Stamp is not presented in the VOB, the presentation starting time shall be calculated in the manner of MPEG Specification.

"M_VOBI_SRPN" describes the M_VOBI Search Pointer number of the corresponding VOB of this Cell.

"C_EPI_Ns" describes the number of C_EPIs.

"C_V_S_PTM" describes the presentation start time of the Cell. Note that C_V_S_PTM and C_V_E_PTM shall satisfy the following restrictions.
(1) In case of a Cell in the Original PGC:
   C_V_S_PTM shall fall into the first four VOBUs of the corresponding VOB.
   C_V_E_PTM shall fall into the first four VOBUs of the corresponding VOB.
(2) In case of a Cell in an User Defined PGC:
   The following relation has to be fulfilled.
      O_C_V_S_PTM≦C_V_S_PTM<C_V_E_PTM≦O_C_V_E_PTM
      where O_C_V_S_PTM and O_C_V_ E_PTM are the presentation start and end time of the Original Cell which corresponds to the VOB referred by this Cell.

"C_V_E_PTM" describes the presentation end time of the Cell.

"S_VOGI_SRPN" describes the S_VOGI Search Pointer number of the VOB Group which is used by this Cell.

"C_EPI_Ns" describes the number of C_EPIs in this Cell.

"S_S_VOB_ENTN" describes the start S_VOB_ENT number for this Cell. If this Cell is in the Original PGC, S_S_VOB_ENTN shall be set to "1".

Note that S_S_VOB_ENTN and E_S_VOB_ENTN shall satisfy the following restrictions.
1≦S_S_VOB_ENTN≦E_S_VOB_ENTN≦V_PART_Ns
where V_PART_Ns is the number of Video Parts in the corresponding Still Picture VOB Group of this Cell.

"E_S_VOB_ENTN" describes the end S_VOB_ENT number for this Cell.

The video stream 110 corresponds to a VRO file (VR_MOVIE.VRO), and the video stream management information 120 to an IFO file (VR_MANGR.IFO).

Also, the basic reproduction procedure 121 corresponds to a program, and the edited reproduction procedure 122 to a play list.

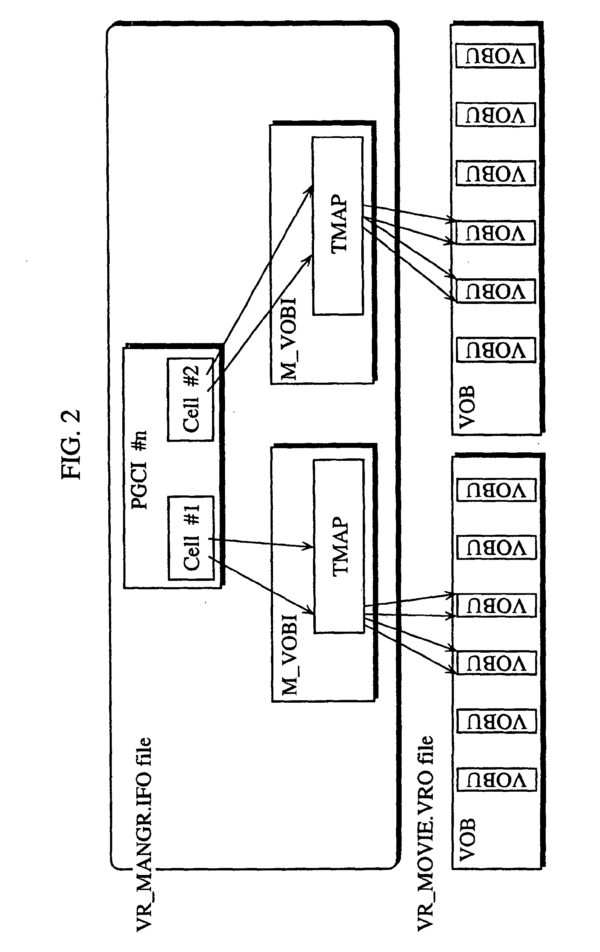

FIG. 2 shows data structures of the VRO file and the IFO file including the program and the play list.

The VRO file is obtained by encoding digital AV data according to the MPEG (Moving Picture Expert Group) Specification (ISO/IEC13818) that defines the digital AV data encoding format and the like.

The MPEG Specification defines the GOP (Group of Pictures) hierarchy.

Here, a GOP includes encoded video data of at least one frame, and is defined to realize special reproduction, such as "backward scan", "forward scan", and "randomly accessed reproduction".

Since referencing correlations between frames in each GOP are independent, random access can be realized in GOP units.

The VRO file is composed of at least one VOB as shown in FIG. 2, and defines the VOBU (Video Object Unit) hierarchy and the VOB (Video Object) hierarchy.

Here, a VOBU includes at least one GOP and a plurality of sets of audio data.

Also, a VOB includes one or more VOBUs that have common video attribute information as shown in FIG. 2. Here, the video attribute information includes,video resolution, an aspect ratio, and a display method that indicates one of NTSC (National Television Standards Committee), and PAL (Phase-Alternation Line). Each VOB has video attribute information that is shared within the VOB.

Basically, a VOB is a group of VOBUs generated between the start and the end of one recording process. However, when the recording process is temporarily suspended, or when the video resolution is changed during the recording process, the VOB is usually divided.

Usually, different VOBs are not processed as a consecutive reproduction unit when reproduced.

However, since the recording process is suspended by the user to avoid recording of an unnecessary video, the user may want these different VOBs to be processed as a consecutive reproduction unit.

Furthermore, the recording process may be suspended automatically by an encoder with the user being unnoticed. Also, the change of the video resolution may occur without a user's intention. The divided VOBs resulting from these should be processed as a consecutive reproduction unit.

In view of this, to process a plurality of VOBs as a consecutive reproduction unit, the program and the play list in the IFO file have such hierarchical structures as shown in FIG. 2.

In the IFO file, both the program and the play list include PGCI and TMAP.

The PGCI is a reproduction unit indicated by the user at one time. The PGCI that includes at least one cell is processed as a consecutive reproduction unit during reproduction. Here, a cell is information showing a reproduction unit that can be assigned within a VOB, and includes a VOB number, a start time, and an end time.

The TMAP is a conversion table that is used to specify an address of each VOBU within the VOB using the start time and the end time included in the cell.

The PGCI can include a plurality of cells that correspond to different VOBs. This enables sets of video data that correspond to different VOBs to be processed as a continuous reproduction unit.

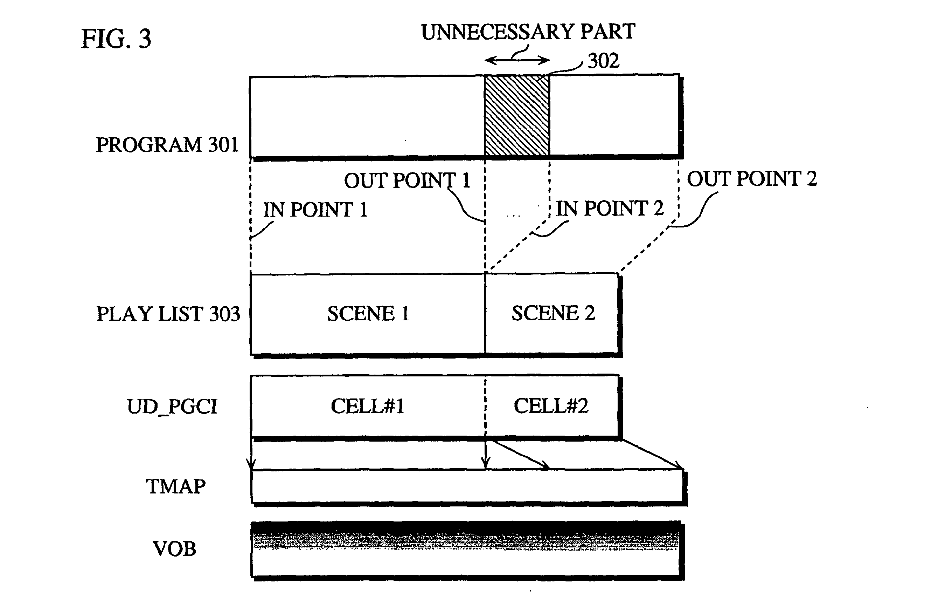

FIG. 3 shows one example of non-destructive video editing.

It is assumed that a video data material made up of one VOB is prerecorded on a DVD-RAM.

As shown in the figure, non-destructive video editing can be performed by deleting an unnecessary part 302 from a program 301 to generate a play list 303.

In the play list 303, an edited section preceding the position where the unnecessary part 302 has been deleted is referred to as SCENE 1, and an edited section succeeding the position where the unnecessary part 302 has been deleted is referred to as SCENE 2. SCENE 1 corresponds to CELL#1, and SCENE 2 to CELL#2 in the UD_PGCI (the PGCI for an edited program).

When the part of the video data material made up of one VOB has been deleted by the user's editing operation to perform non-destructive video editing as described above, the resulting two scenes match the two sets of video data shown by the two cells.

Accordingly, in the case where the video data material made up of one VOB is edited, a scene can be specified by a cell during reproduction . Also, the point where the user's editing operation has been performed can be specified by searching for a seam between cells.

The point where the editing operation has been performed is the position where the user's clear indication has been given. Providing various functions in scene units can further enhance convenience for the user when giving such an indication. Examples of the various functions relating to reproduction are reproduction of only specific scenes, display of a total reproduction duration of each scene, thumbnail image display of each scene, and repeat reproduction of only specific scenes. Examples of the various functions relating to re-editing are re-editing or deleting in scene units, insert between scenes, and update of a play list due to a partial deletion of a video data material.

### Technical Problem

However, the problem arises because a scene does not always match a cell.

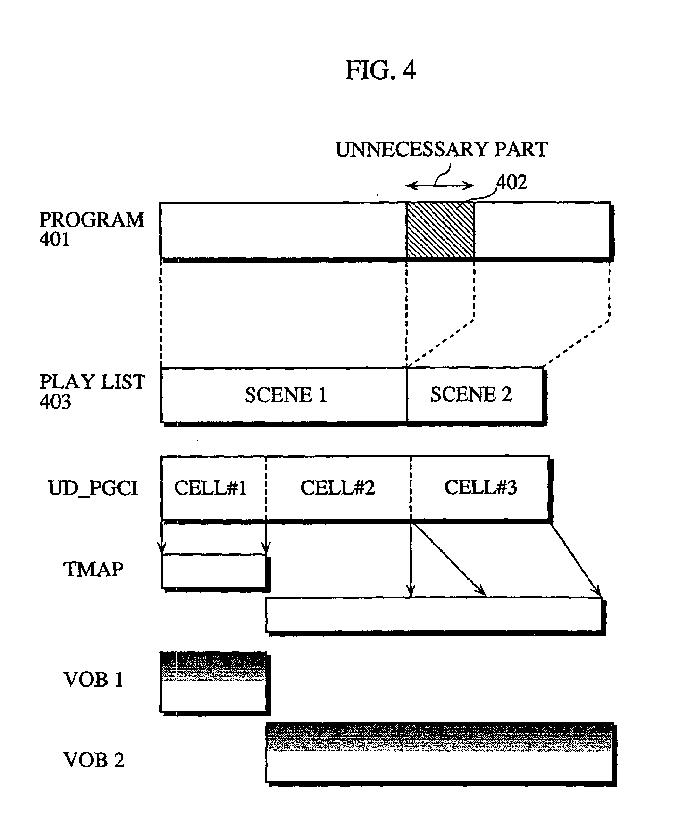

FIG. 4 shows another example of non-destructive video editing.

It is assumed that a video data material made up of two VOBs that have been divided due to a reason unintended by the user is prerecorded on a DVD-RAM.

Non-destructive video editing can be performed by deleting an unnecessary part 402 from a program 401 to generate a play list 403.

In the play list 403, an edited section preceding the position where the unnecessary part 401 has been deleted is referred to as SCENE 1, and an edited section succeeding the position where the unnecessary part 401 has been deleted is referred to as SCENE 2. SCENE 1 corresponds to CELL#1 and CELL#2, and SCENE 2 to CELL#3 in the UD_PGCI.

When the part of the video data material made up of two VOBs is deleted by the user's editing operation to perform non-destructive video editing as described above, the resulting two scenes do not match the three sets of video data shown by the three cells.

Accordingly, in the case where the video data material made up of at least two VOBs is edited, a scene cannot be specified by a cell during reproduction. Also, the point where the user' s editing operation has been performed cannot be specified simply by searching for a seam between cells.

Being unable to specify a scene further results in the above described various functions not being realized.

To realize the various functions in scene units during reproduction or re-editing, the present invention aims to provide an editing apparatus that is capable of editing video data while being able to specify a scene, an editing method, an editing program, a recording medium on which the editing program is recorded, and a recording medium on which the edited video data is recorded. To realize the various functions in scene units, the present invention further aims to provide a reproducing apparatus that is capable of specifying a scene, a reproducing method, a reproducing program, and a recording medium on which the reproducing program is recorded.

### Disclosure of the Invention

The editing apparatus of the present invention edits original management information including an original reproduction procedure of a video stream, the video stream having a plurality of sets of picture data, the video stream and the original management information being prerecorded on a digital recording medium, the editing apparatus including: a receiving unit operable to receive, from a user, edit information that specifies a part the user desires to edit in the original reproduction procedure; a generating unit operable to (a) generate, based on the original reproduction procedure, a new reproduction procedure in which the part specified by the edit information has been edited, and (b) generate new management information including the new reproduction procedure; an attaching unit operable to attach entry information to the new management information, the entry information showing a point in the new reproduction procedure at which the editing has been performed according to the user's intention; and a recording unit operable to record the new management information to which the entry information has been attached, onto the digital recording medium.

With this construction, entry information that marks a point in the reproduction procedure at which editing has been performed according to the user' s intention is recorded on the digital recording medium. Accordingly, each scene can be specified during reproduction or re-editing. This realizes the various functions in scene units.

Also, the receiving unit may receive the edit information that specifies a set of picture data the user desires to delete by editing, out of the plurality of sets of picture data shown by the original reproduction procedure, the generating unit may generate the new reproduction procedure in which a reproduction instruction to reproduce the set of picture data specified by the edit information has been deleted from the original reproduction procedure, and the attaching unit may attach, to the new management information, the entry information showing the point in the new reproduction procedure at which the reproduction instruction has been deleted according to the user's intention.

With this construction, entry information that marks a point in the reproduction procedure at which a set of picture data has been deleted according to the user's intention can be recorded on the digital recording medium.

Also, the receiving unit may receive the edit information that specifies (a) a set of picture data the user desires to add by editing and (b) a position in the original reproduction procedure at which the set of picture data is to be added; the generating unit may generate the new reproduction procedure in which a reproduction instruction to reproduce the set of picture data specified by the edit information has been added to the reproduction procedure at the position specified by the edit information; and the attaching unit may attach, to the new management information, the entry information showing the point in the new reproduction procedure at which the reproduction instruction has been added according to the user' s intention .

With this construction, entry information that marks a point in the reproduction procedure at which a set of picture data has been added according to the user's intention can be recorded on the digital recording medium.

Also, the editing apparatus may further include: an obtaining unit operable to obtain deletion information that specifies a set of picture data the user desires to delete from the digital recording medium; a deleting unit operable to delete the set of picture data specified by the deletion information from the digital recording medium; a judging unit operable to judge whether entry information is attached to a part of the original management information, the part corresponding to the deleted set of picture data; an updating unit operable to delete a reproduction instruction to reproduce the deleted set of picture data, from the original reproduction procedure, to update the original management information; and a re-attaching unit operable to re-attach the entry information to the updated management information when a judgment result of the judging unit is affirmative, the entry information showing a point in the reproduction procedure included in the updated management information at which the reproduction instruction has been deleted.

With this construction, when entry information had been attached to a part corresponding to the deleted set of picture data, entry information that marks a point where the reproduction instruction to reproduce the set of picture data has been deleted can be attached to the reproduction procedure again.

Also, the video stream may be recorded on the digital recording medium in units of objects, each object being composed of sets of still picture data that have a common condition required for reproduction, the sets of still picture data respectively being given numbers, the original reproduction procedure included in the original management information may be indicated by at least one cell, the cell being assigned to a range within an object and showing (a) an identifier of the object and (b) numbers of a first set of still picture data and a last set of still picture data in the assigned range of the object, the generating unit may generate the new reproduction procedure in which the cell has been divided by the point at which the editing had been performed, and the attaching unit may attach the entry information to the new management information, the entry information showing the point in the new reproduction procedure at which the cell has been divided.

With this construction, entry information that marks a point at which editing has been performed according to the user's intention can be attached to a seam of a cell that shows numbers of the first set of still picture data and the last set of still picture data in an object recorded on the digital recording medium. Therefore, this entry information can be differentiated from entry information for the other purposes.

Also, the video stream may be recorded on the digital recording medium in units of objects, each object being composed of sets of picture data that have been sequentially recorded and have a common condition required for reproduction, the original reproduction procedure included in the original management information may be indicated by at least one cell, the cell being assigned to a range within an object and showing (a) an identifier of the object and (b) a start time and an end time of sequent sets of picture data in the assigned range of the object, the generating unit may generate the new reproduction procedure in which the cell has been divided by the point where the editing had been performed, and the attaching unit may attach the entry information to the new management information, the entry information showing the point at which the cell has been divided.

With this construction, entry information that marks a point at which editing has been performed according to the user indication can be attached to a seam of a cell that shows the start time and the end time of sequent sets of picture data in an object recorded on the digital recording medium. Therefore, this entry information can be differentiated from entry information for the other purposes.

Also, the entry information may have a text region, and the attaching unit may attach, to the new management information, the entry information whose text region contains a message indicating that the editing has been performed on the point according to the user's intention.

With this construction, entry information that marks a point at which editing has been performed according to the user' s intention includes a text region. Since the text region includes a message indicating that the editing has been performed on the point according to the user's intention, this entry information can be differentiated from entry information for the other purposes.

The reproducing apparatus of the present invention reproduces a video stream having a plurality of sets of picture data, based on management information including a reproduction procedure of the video stream, the video stream and the management information being prerecorded on a digital recording medium, entry information being attached to the management information, the entry information showing a point at which editing has been performed according to a user's intention, the reproducing apparatus including: a collecting unit operable to collect sets of section information featuring sections in the reproduction procedure included in the management information, each section being separated by the entry information attached to the management information; and a display unit operable to display the collected sets of section information in a form that can be recognized by the user.

With this construction, sets of section information for sections separated by the entry information can be displayed. Due to this, processing in section units can be realized.

Also, the reproducing apparatus may further include: a receiving unit operable to receive a user's intention to reproduce a section, the section being selected by the user with reference to the displayed sets of section information; and a reproducing unit operable to reproduce the selected section based on the received user's intention.

With this construction, reproduction in section units can be realized.

Also, the collecting unit may collect a set of picture data of one picture to be reproduced in each section as a set of section information, and the display unit may display the collected set of picture data of each section as a thumbnail image.

With this construction, a set of picture data of each section can be displayed as a thumbnail image.

Also, the collecting unit may collect a reproduction duration of each section as a set of section information, and the display unit may display the collected reproduction duration of each section on a screen.

With this construction, reproduction duration of each section can be displayed.

Also, the video stream may be recorded on the digital recording media in units of objects, each object being composed of sets of still picture data that have a common condition required for reproduction, the sets of still picture data respectively being given numbers, the reproduction procedure included in the management information may be indicated by at least one cell, the cell being assigned to a range within an object and showing (a) an identifier of the object and (b) numbers of a first set of still picture data and a last set of still picture data in the assigned range of the object, unintentional entry information may be attached to the management information, the unintentional entry information not showing a point where editing has been performed according to a user's intention, a point shown by the unintentional entry information not matching a seam of a cell, and the collecting unit may collect the sets of section information featuring the sections in the reproduction procedure, each section being separated by the entry information that shows a point matching a seam of a cell.

With this construction, sets of section information for sections separated by such entry information that is attached to a seam of a cell that shows numbers of the first set of still picture data and the last set of still picture data in an object recorded on the digital recording medium. Therefore, this entry information can be differentiated from entry information for the other purposes.

Also, the video stream may be recorded on the digital recording medium in units of objects, each object being composed of sets of picture data that have been sequentially recorded and have a common condition required for reproduction, the reproduction procedure included in the management information may be indicated by at least one cell, the cell being as signed to a range within an object and showing (a) an identifier of the object and (b) a start time and an end time of sequent sets of picture data in the assigned range of the object, unintentional entry information may be attached to the management information, the unintentional entry information not showing a point where editing has been performed according to a user's intention, a point shown by the entry information not matching a seam of a cell, and the collecting unit may collect the sets of section information featuring the sections in the reproduction procedure, each section being separated by the entry information that shows a point matching a seam of a cell.

With this construction, sets of section information for sections separated by such entry point that is attached to a seam of a cell that shows the start time and the end time of sequent sets of picture data in an object recorded on the digital recording medium. Therefore, this entry information can be differentiated from entry information for the other purposes.

Also, unintentional entry information may be attached to the management information, the unintentional entry information not showing a point where editing has been performed according to a user's intention, the entry information that shows a point where editing has been performed according to a user's intention may include a text region that contains a message indicating that the editing has been performed on the point according to the user's intention, and the collecting unit may collect the sets of section information featuring the sections in the reproduction procedure included in the management information, each section being separated by the entry information whose text region contains the message indicating that the editing has been performed on the point according to the user's intention.

With this construction, sets of section information for sections separated by the entry information whose text region contains a message indicating that the editing has been performed on the point according to the user's intention can be displayed, and this entry information can be differentiated from entry information for the other purposes.

The editing method of the present invention is for editing original management information including an original reproduction procedure of a video stream, the video stream having a plurality of sets of picture data, the video stream and the original management information being prerecorded on a digital recording medium, the editing method including: a receiving step for receiving, from a user, edit information that specifies a part the user desires to edit in the original reproduction procedure; a generating step for (a) generating, based on the original reproduction procedure, a new reproduction procedure in which the part specified by the edit information has been edited, and (b) generating new management information including the new reproduction procedure; an attaching step for attaching entry information to the new management information, the entry information showing a point in the new reproduction procedure at which the editing has been performed according to the user's intention; and a recording step for recording the new management information to which the entry information has been attached, onto the digital recording medium.

With this construction, entry information that marks a point in the reproduction procedure at which editing has been performed according to the user's intention is recorded on the digital recording medium. Accordingly, each scene can be specified during reproduction or re-editing. This realizes the various functions in scene units.

The reproducing method of the present invention is for reproducing a video stream having a plurality of sets of picture data, based on management information including a reproduction procedure of the video stream, the video stream and the management information being prerecorded on a digital recording medium, entry information being attached to the management information, the entry information showing a point at which editing has been performed according to a user's intention, the reproducing method including: a collecting step for collecting sets of section information featuring sections in the reproduction procedure included in the management information, each section being separated by the entry information attached to the management information; and a display step for displaying the collected sets of section information in a form that can be recognized by the user.

With this construction, sets of section information for sections separated by the entry information can be displayed. Due to this, processing in section units can be realized.

The editing program of the present invention is for editing original management information including an original reproduction procedure of a video stream, the video stream having a plurality of sets of picture data, the video stream and the original management information being prerecorded on a digital recording medium, the editing program including: a receiving step for receiving, from a user, edit information that specifies a part the user desires to edit in the original reproduction procedure; a generating step for (a) generating, based on the original reproduction procedure, a new reproduction procedure in which the part specified by the edit information has been edited, and (b) generating new management information including the new reproduction procedure; an attaching step for attaching entry information to the new management information, the entry information showing a point in the new reproduction procedure at which the editing has been performed according to the user's intention; and a recording step for recording the new management in format ion to which the entry information has been attached, onto the digital recording medium.

With this construction, entry information that marks a point in the reproduction procedure at which editing has been performed according to the user's intention is recorded on the digital recording medium. Accordingly, each scene can be specified during reproduction or re-editing. This realizes the various functions in scene units.

The reproducing program of the present invention is for reproducing a video stream having a plurality of sets of picture data, based on management information including a reproduction procedure of the video stream, the video stream and the management information being prerecorded on a digital recording medium, entry information being attached to the management information , the entry information showing a point at which editing has been performed according to a user's intention, the reproducing program including: a collecting step for collecting sets of section information featuring sections in the reproduction procedure included in the management information, each section being separated by the entry information attached to the management information; and a display step for displaying the collected sets of section information in a form that can be recognized by the user.

With this construction, sets of section information for sections separated by the entry information can be displayed. Due to this, processing in section units can be realized.

The digital recording medium of the present invention includes a region in which a video stream and management information are recorded, the video stream including a plurality of sets of picture data, the management information including a reproduction procedure of the video stream, the management information including entry information showing a point in the reproduction procedure at which editing has been performed according to a user's intention.

Since the digital recording medium records entry information that marks a point in the reproduction procedure at which editing has been performed according to the user's intention, a scene can be specified during reproduction and re-editing. Accordingly, the various functions can be realized in scene units.

The video stream may be recorded on the digital recording medium in units of objects, each object being composed of sets of still picture data that have a common condition required for reproduction, the sets of still picture data being given numbers, the reproduction procedure included in the management information may be indicated by at least one cell, the cell being assigned to a range within an object and showing (a) an identifier of the object and (b) numbers of a first set of still picture data and a last set of still picture data in the assigned range of the object, and the entry information that shows a point at which the editing has been performed according to the user' s intention may match a seam of a cell.

With this construction, only entry information that matches a seam of a cell that shows numbers of the first set of still picture data and the last set of still picture data in an object that is to be recorded on the digital recording medium can mark a point in the reproduction procedure at which editing has been performed according to the user' s intention . Therefore, entry information for the other purposes can also be attached.

The video stream may be recorded on the digital recording medium in units of objects, each object being composed of sets of picture data that have sequentially been recorded and have a common condition required for reproduction, the reproduction procedure included in the management information may be indicated by at least one cell, the cell being assigned to a range within an object and showing (a) an identifier of the object and (b) a first time and an end time of sets of picture data in the assigned range of the object, and the entry information that shows a point at which the editing has been performed according to the user's intention may match a seam of a cell.

With this construction, only entry information that matches a seam of a cell that shows the start time and the end time of sequent sets of picture data in an object that is to be recorded on the digital recording medium can mark a point in the reproduction procedure at which editing has been performed according to the user's intention. Therefore, entry information for the other purposes can also be attached.

Unintentional entry information may be attached to the management information, the unintentional entry information not showing a point at which editing has been performed according to a user's intention, a point shown by the entry information not matching a seam of a cell.

With this construction, entry information for the other purposes is also recorded on the rewritable DVD. Since the entry information for the other purposes does not match a seam of a cell, it can be differentiated, and so entry information for the different purposes can be used together.

The entry information showing the point in the reproduction procedure at which the editing has been performed according to the user's intention may include a text region that contains a message indicating that the editing has been performed on the point according to the user's intention.

With this construction, only entry information whose text region contains a message indicating that editing has been performed on the point according to the user' s intention marks the point at which the editing has been performed according to the user indication. Therefore, entry information for the other purposes can also be attached.

Unintentional entry information may be attached to the management information, the unintentional entry information not showing a point in the reproduction procedure at which editing has been preformed according to a user's intention, the unintentional entry information either (a) not including a text region or (b) including a text region that does not contain a message indicating that the editing has been performed on the point according to the user's intention.

With this construction, entry information for the other purposes is recorded on the rewritable DVD. The entry information for the other purposes either does not include a text region or includes a text region whose content differs from that of entry information to mark a point where the editing has been performed according to the user indication. Therefore, entry information for the different purposes can be used together.

### Brief Description of the Drawings

FIG. 1 schematically shows various data recorded on a disc medium on which non-destructive video editing has been performed;
FIG. 2 schematically shows data structures of the VRO file and the IFO file including the program and the play list;
FIG. 3 shows one example of non-destructive video editing;
FIG. 4 shows another example of non-destructive video editing;
FIG. 5 shows a construction of an editing apparatus relating to the first embodiment of the present invention;
FIG. 6 schematically shows a data structure of cell information for a movie;
FIG. 7 schematically shows one example of non-destructive video editing for deleting picture data from a program to generate a play list;
FIG. 8 schematically shows one example of non-destructive video editing for deleting picture data from a play list to re-edit the play list;
FIG. 9 schematically shows one example of non-destructive video editing for inserting another scene between scenes in a play list;
FIG. 10 schematically shows one example of non-destructive video editing for adding another scene to the start of a play list;
FIG. 11 is a flowchart showing procedures for a picture data deletion operation and a scene addition operation performed by the editing apparatus in the first embodiment;
FIG. 12 shows a construction of a reproducing apparatus relating to the first embodiment;
FIG. 13 shows one example of a thumbnail image display and one example method for selecting a scene to give a reproduction indication;
FIG . 14 is a flowchart showing procedures of a thumbnail image display operation and a reproduction duration display operation performed by the reproducing apparatus in the first embodiment;
FIG. 15 shows a construction of an editing apparatus relating to the second embodiment of the present invention relates;
Fig. 16 schematically shows one example of re-editing of a play list and a play list required when picture data is deleted from a program;
FIG. 17 is a flowchart showing a procedure for updating a play list required by a partial deletion of a video data material, performed by the editing apparatus in the second embodiment;
FIG. 18 schematically shows a data structure of cell information for a still picture; and
FIG. 19 schematically shows a data structure of PGCI (PGC_Information).

### Best Mode for Carrying Out the Invention

### (First Embodiment)

### [Overall Construction]

The first embodiment of the present invention relates to an editing apparatus that edits a reproduction procedure of a video stream recorded on a digital recording medium such as a DVD-RAM, and to a reproducing apparatus. When editing the reproduction procedure by an indication from the user, the editing apparatus attaches information that marks a point where the editing has been performed to the edited reproduction procedure, and records the edited reproduction procedure with such information onto the digital recording media. The reproducing apparatus can identify the edited position based on the attached information. Due to this construction, various functions such as reproduction and re-editing can be performed in units of sections that are separated by such information.

### [Construction of the Editing Apparatus]

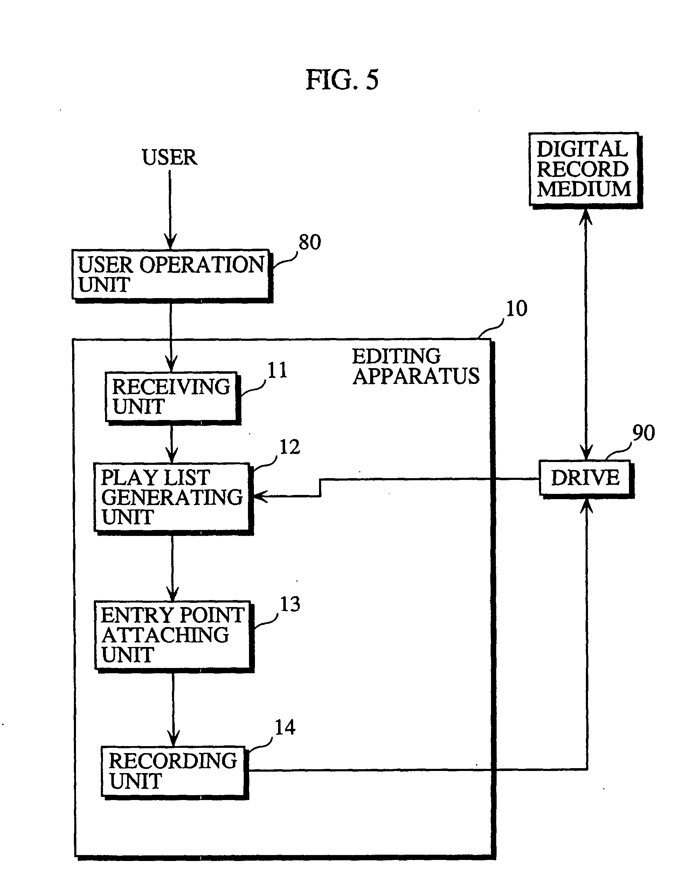

FIG. 5 shows the construction of the editing apparatus to which the first embodiment of the present invention relates. The editing apparatus 10 shown in FIG. 5 is roughly composed of a receiving unit 11, a play list generating unit 12, an entry point attaching unit 13, and a recording unit 14.

Note that FIG. 5 also shows a user operation unit 80 and a drive 90.

The receiving unit 11 receives various indications from the user via the user operation unit 80. As examples, the receiving unit 11 receives an indication of a program or a play list on which the user desires to perform non-destructive video editing, or indication information that specifies picture data or the like the user desires to delete or add by non-destructive video editing.

Here, non-destructive video editing is represented by two cases, one for partially deleting picture data, and the other for adding picture data.

In the case of partially deleting picture data, the receiving unit 11 receives such indication information from the user that specifies the picture data the user desires to delete. In the case of adding picture data, the receiving unit 11 receives such indication information from the user that specifies the picture data of a scene the user desires to add and a position where the picture data is to be added.

The play list generating unit 12 deletes or adds the picture data specified by the indication information received via the receiving unit 11, to or from a video stream, based on the target program or play list prerecorded on the digital recording medium via the drive 90. As a result of this, the play list generating unit 12 generates a play list.

To be more specific, the play list generating unit 12 generates, in the case of deleting picture data, a play list from which the picture data specified by the indication information has been deleted . The play list generating unit 12 generates, in the case of adding picture data, a play list to which the picture data specified by the indication information has been added at the position specified by the indication information.

The entry point attaching unit 13 attaches an Entry Point (hereafter simply referred to as "EP") to the play list generated by the play list generating unit 12, to mark a position where non-destructive video editing has been performed according to the user indication.

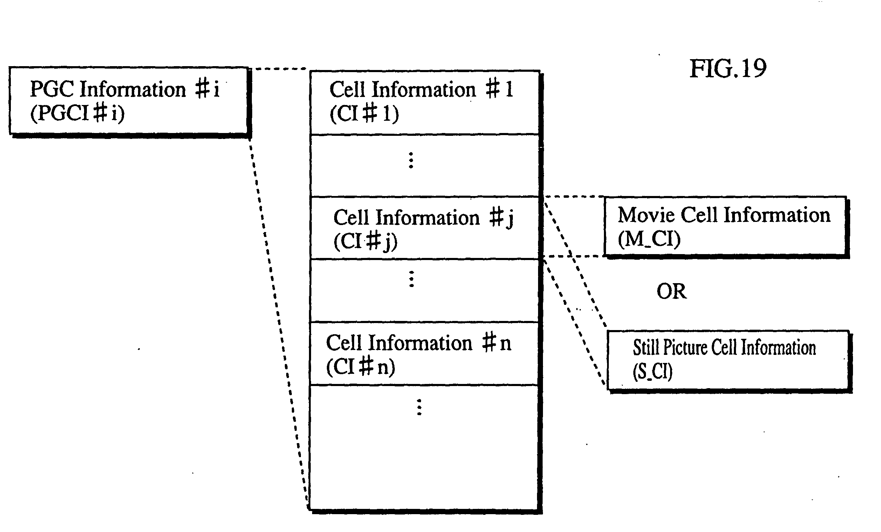

FIG. 19 schematically shows a data structure of PGCI (PGC Information).

As shown in FIG. 19, the PGCI includes cell information (CELL_Information). The cell information at least includes cell information for a movie (Movie_Cell_Information), and cell information for a still picture (Still_Picture_Cell_Information).

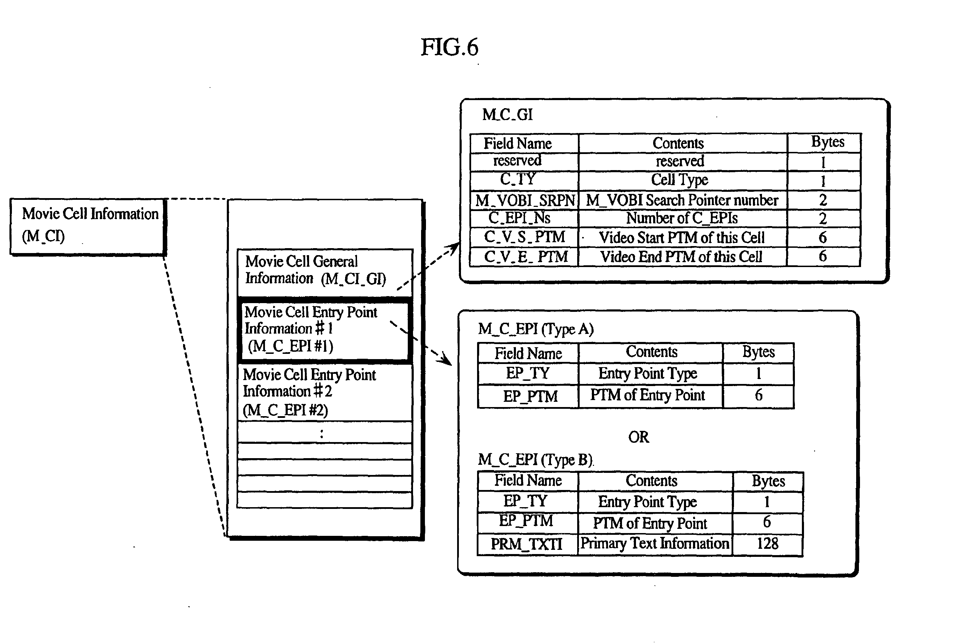

FIG. 6 schematically shows a data structure of cell information for a movie (Movie_Cell_Information).

The cell information for a movie includes general information for a movie (Movie_Cell_general_Information) and EP information for a movie cell (Movie_Cell_Entry_Point_Information). The general information for a movie cell includes:
M_VOBI_SRPN
C_EPI_Ns
C_V_S_Ns
C_V_S_PTN
C_V_E_PTN

The data structure for an EP for a movie includes two types: "M_C_EPI (Type A)" (hereafter simply referred to as "TypeA" ; and "M_C_EPI (Type B)" (hereafter simply referred to as "Type B".

Type A data structure is used when no Primary Text Information exists. Type B data structure is used when Primary Text Information exits.

Type A includes "EP_TY" and "EP_PTM".

Type B includes "EP_TY", "EP_PTM", and "PRM_TXI".

EP_TY describes EP Type of this Entry Point.

EP_PTM describes the PTM for this Entry Point.

PRM_TXTI describes the Primary Text Information for this Entry Point.

When the Presentation Time Stamp is not presented in the VOB, the presentation starting time shall be calculated in the manner of MPEG Specification.

Here, when the picture data is deleted according to the user indication, the entry point attaching unit 13 attaches the EP to the position where the picture data has been deleted. When the picture data is added to the start or the end of the target program or play list according to the user indication, the entry point attaching unit 13 attaches the EP to the position where the picture data has been added. When the picture data is inserted into the target program or play list according to the user indication, the entry point attaching unit 13 attaches the EP to both the start position and the end position of the inserted picture data.

The recording unit 14 records the play list to which the EP has been attached by the entry point attaching unit 13 in the above described way, onto the digital recording medium via the drive 90.

The user operation unit 80 includes an input device, such as a keyboard or a mouse, and an output device, such as a monitor or a speaker. The user operation unit 80 displays data that may be useful for the user in editing, and notifies the receiving unit 11 of a user operation such as an indication relating to editing.

The drive 90 may be realized by a DVD-RAM drive as one example, and reads and writes data to and from the rewritable digital recording medium.

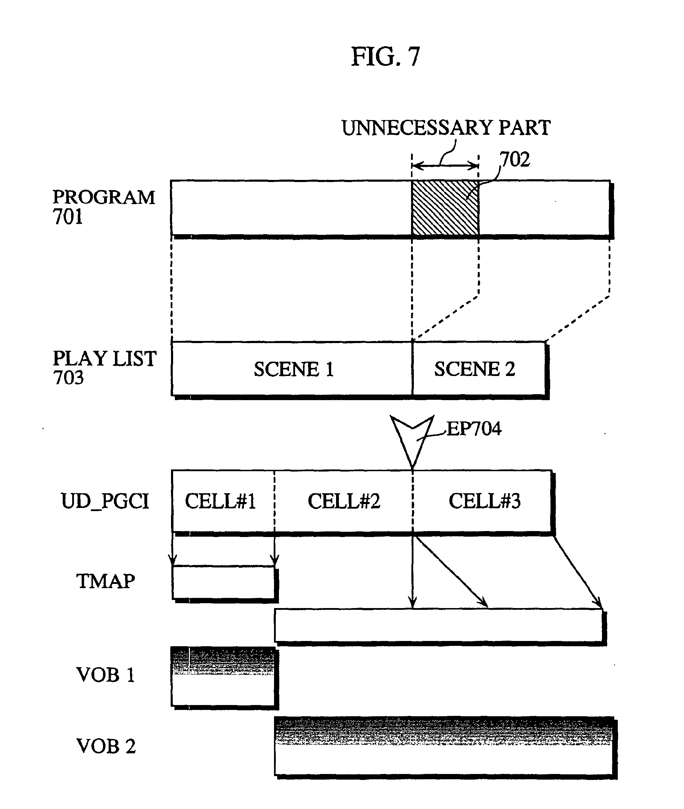

FIG. 7 schematically shows one example of non-destructive video editing for deleting picture data from a program to generate a play list.

In the example shown in FIG. 7, the receiving unit 11 receives such indication information from the user that indicates to delete an unnecessary part 702 from a program 701. Following this, the play list generating unit 12 generates a play list 703 based on the program 701. The entry point attaching unit 13 attaches EP704 to a position
where the unnecessary part 702 has been deleted.

As shown in FIG. 7, by attaching EP704 to a "user-intended seam" between CELL#2 and CELL#3, the seam marked with EP704 can be differentiated from a "user-unintended seam" between CELL#1 and CELL#2. This enables such a "user-intended seam" to be specified during reproduction or re-editing. Here, EP704 can be attached either to the end of CELL#2 or to the start of CELL#3.

Alternatively, by attaching an EP to the seam between CELL#1 and CELL#2, the seam marked with the EP can be differentiated from the seam between CELL#2 and CELL#3. In this case, the EP can be attached either to the end of CELL#1 or to the start of CELL#2.

Note that when an EP is also utilized for other purposes , an EP to mark a position where non-destructive video editing has been performed according to a user indication and an EP for the other purposes may be differentiated during reproduction or re-editing in the following arrangement. The former EP is always attached to a seam between cells, while the latter EP is not attached to a seam between cells.

Alternatively, an EP of type B may be used as an EP to mark a position where non-destructive video editing has been performed according to a user indication, so that its text region can include a message showing "non-destructive video editing has been performed according to a user indication". An EP of type B may also be used as an EP for the other purposes although its text region does not include such a message, or instead, an EP of type A may be used as an EP for the other purposes. In this way, an EP to mark a position where non-destructive video editing has been performed according to a user indication and an EP for the other purposes can be differentiated during reproduction or re-editing.

Although a seam between scenes basically matches a seam between cells, cells that are supposed to have a seam may be seamlessly linked for the purpose of reducing the total number of cells. Also, there are cases that the user moves an EP marking a seam between scenes, to a position that is not a seam between cells.

In such a case, an EP that marks a position where non-destructive video editing has been performed according to a user indication is not always attached to a seam between cells.

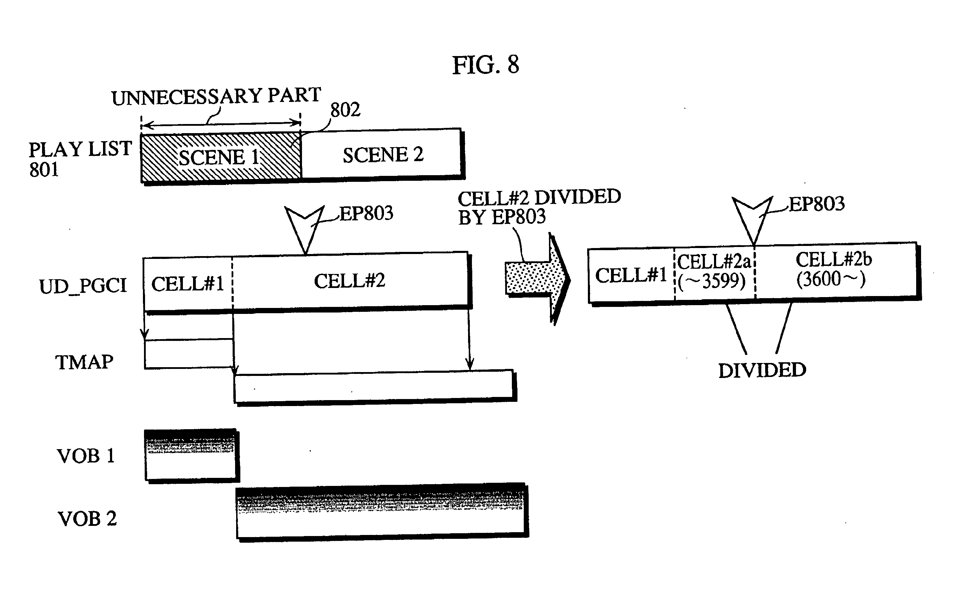

FIG. 8 schematically shows one example of non-destructive video editing for deleting picture data from a play list to re-edit the play list.

It is assumed that EP803 that indicates a seam between scenes is attached to CELL#2 at a position shown by the time code of 3600 fields (at a position where fields have been displayed in one minute according to the NTSC (National Television System Committee) standard).

In the example shown in FIG. 8, the receiving unit 11 receives such indication information from the user that indicates to delete an unnecessary part 802 from a play list 801. Based on the attached EP803, the play list generating unit 12 divides CELL#2 into CELL#2a and CELL#2b, CELL#2 including a field shown by the time code of 3599 and the preceding fields, CELL#2b including a filed shown by the time code of 3600 and the succeeding fields. The play list generating unit 12 then deletes CELL#1 and CELL#2a to re-edit the play list 801. The entry point attaching unit 13 keeps EP803 at the start of CELL#2b.

By keeping EP803 at the start of CELL#2b to mark a "user-intended seam" as shown in FIG. 8, this seam can be specified as the "user-intended seam" during reproduction or re-editing.

Note that the play list generating unit 12 may delete CELL#1 and CELL#2 after generating CELL#2b based on CELL#2 when re-editing the play list 801.

Also, by making the entry point attaching unit 13 attach EP803 to the start of CELL#2b, EP803 is not deleted when CELL#2a is deleted.

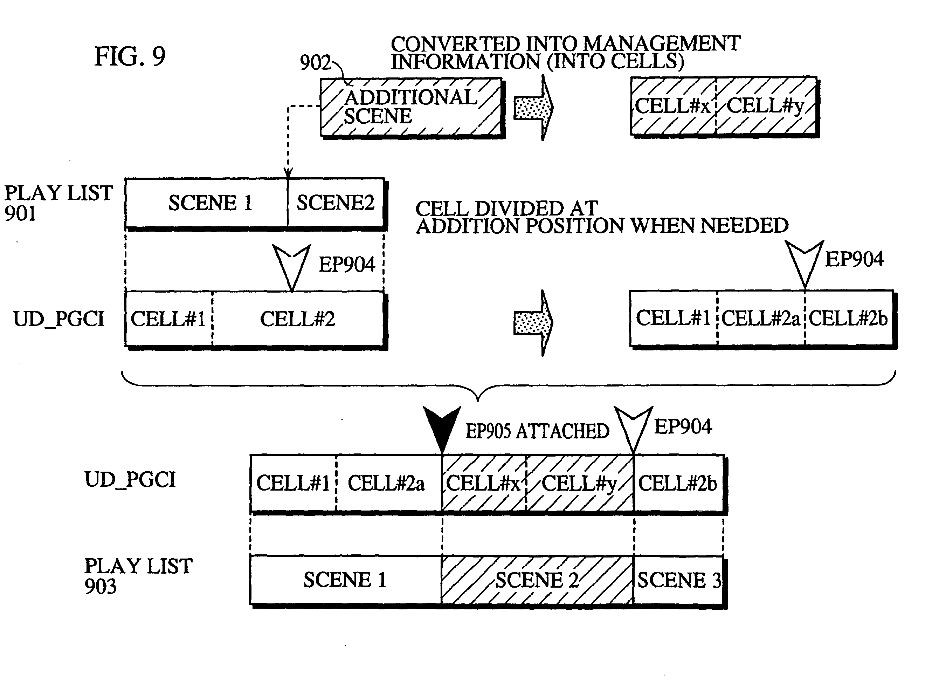

FIG. 9 schematically shows one example of non-destructive video editing for inserting another scene between scenes in a play list.

It is assumed that EP904 that indicates a seam between scenes is attached to the middle of CELL#2.

In the example shown in FIG. 9, the receiving unit 11 receives such indication information from the user that indicates to insert an additional scene 902 between SCENE 1 and SCENE 2 in a play list 901. The play list generating unit 12 divides CELL#2 into CELL#2a and CELL#2b based on EP904. The play list generating unit 12 then inserts CELL#x and CELL#y that correspond to the additional scene 902, between CELL#2a and CELL#2b. The entry point attaching unit 13 then attaches EP905 to a seam between CELL#2a and CELL#x.

As shown in FIG. 9, by attaching EP905 to the "user-intended seam" between CELL#2a and CELL#x, and keeping EP904 that has been attached to the seam between CELL#y and CELL#2b, these seams can be differentiated from other seams between cells, and can be specified as the "user-intended seams" during reproduction or re-editing.

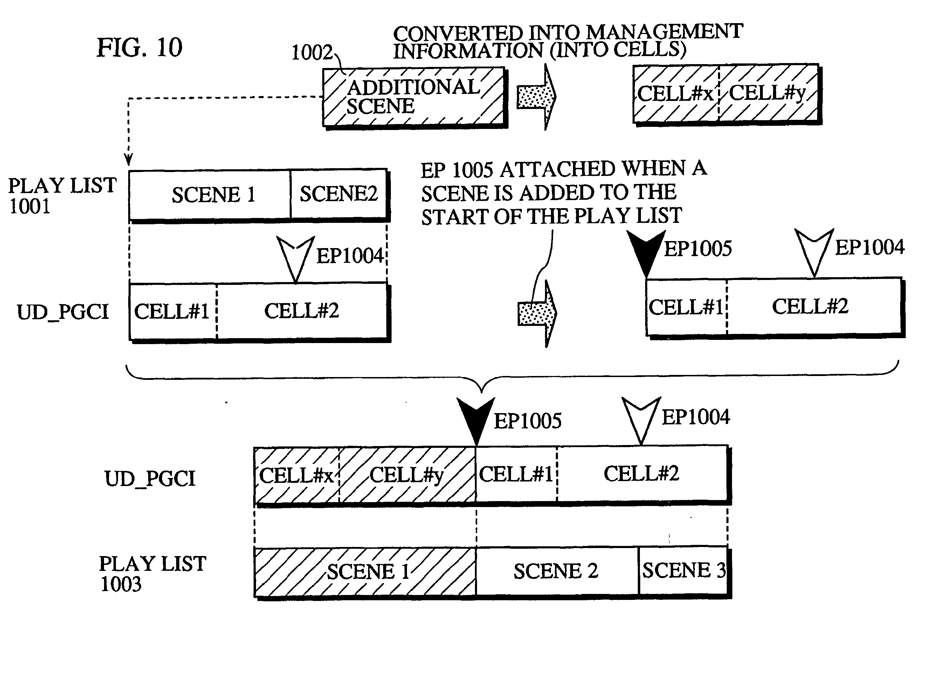

FIG. 10 schematically shows one example of non-destructive video editing for adding another scene to the start of a play list.

It is assumed that EP1004 that indicates a seam between scenes is attached to the middle of CELL#2.

In the example shown in FIG. 10, the receiving unit 11 receives such indication information from the user that indicates to add an additional scene 1002 in front of SCENE 1 in a play list 1001. The play list generating unit 12 adds CELL#x and CELL#y that correspond to the additional scene 1002 in front of CELL#1 to generate a play list 1003. The entry point attaching unit 13 then attaches EP1005 to a seam between CELL#y and CELL#1.

As shown in FIG. 10, by attaching EP1005 to a "user-intended seam" between CELL#y and CELL#1, and keeping EP1004, the "user-intended seam" can be specified during reproduction or re-editing.

### [Operations of the Editing Apparatus]

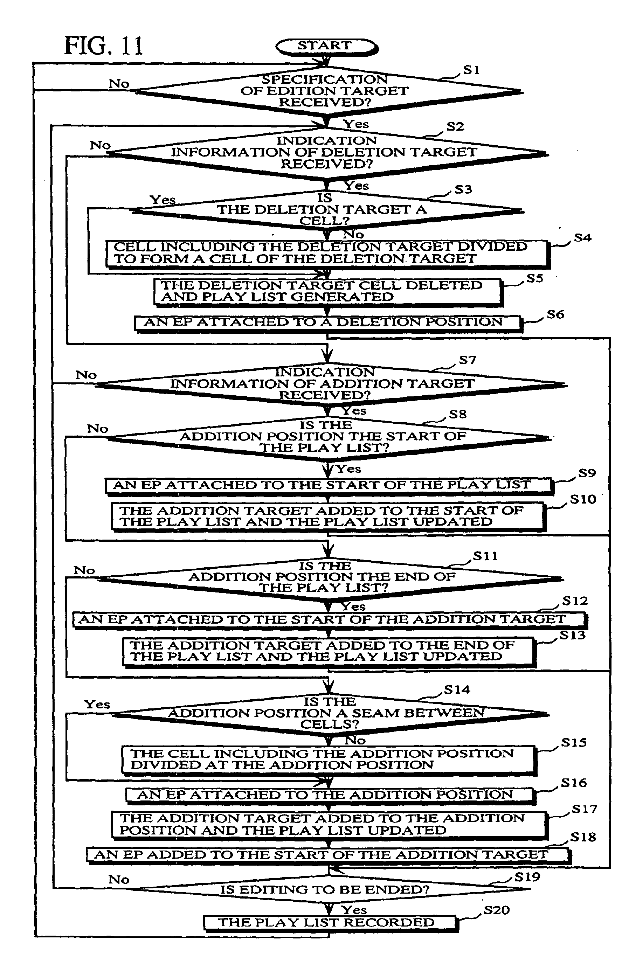

FIG. 11 is a flowchart showing procedures for a picture data deletion operation and a scene addition operation performed by the editing apparatus 10 relating to the first embodiment of the present invention.
(1) The receiving unit 11 waits for a specification of a program or a play list to be edited from the user (step S1)
(2) The receiving unit 11 judges whether indication information that specifies a deletion target is received from the user or not (step S2).
(3) When the indication information that specifies the deletion target is received, the play list generating unit 12 judges whether the deletion target is an independent cell or the deletion target is a part of a cell (step S3).
(4) Only when the deletion target is a part of a cell, the play list generating unit 12 divides the cell so as to form an independent cell of the deletion target (step S4).
(5) The play list generating unit 12 deletes the formed cell of the deletion target, to generate a play list (step S5).
(6) When an EP is not attached to a position where the deletion target cell has been deleted, the entry point attaching unit 13 attaches the EP to the position (step 56).
(7) The receiving unit 11 judges whether indication information that specifies an addition target from the user or not. This indication information includes picture data of a scene the user desires to add and an addition position
   where the picture data is to be added (step S7).
(8) When the indication information that specifies the addition target is received, the play list generating unit 12 judges whether the addition position is the start of the play list or not (step S8).
(9) The entry point attaching unit 13 attaches an EP to the start of the play list (step S9).
(10) The play list generating unit 12 adds the addition target to the start of the play list to update the play list (step S10).
(11) When the addition position is not the start of the play list, the play list generating unit 12 judges whether the addition position is the end of the play list or not (step S11).
(12) The entry point attaching unit 13 attaches an EP to the start of the addition target (step S12).
(13) The play list generating unit 12 adds the addition target to the end of the play list, to update the play list (step S13).
(14) When the addition position is not the end of the play list, the play list generating unit 12 judges whether the addition position is a seam between cells or not (step S14).
(15) Only when the addition position is not the seam between cells, the play list generating unit 12 divides the cell including the addition position at the addition position (step S15).
(16) When an EP is not attached to the addition position, the entry point attaching unit 13 attaches an EP to the addition position (step S16).
(17) The play list generating unit 12 adds the addition target to the addition position, to update the play list (step S17).
(18) The entry point attaching unit 13 attaches an EP to the start position of the added addition target (step S18).
(19) The receiving unit 11 judges whether an indication to end editing of the play list is received from the user or not (step S19).
(20) The recording unit 14 records the play list to which the EP has been attached by the entry point attaching unit 13, onto the digital recording medium via the drive 90 (step S20).

As described above, the editing apparatus relating to the first embodiment of the present invention is capable of attaching an EP to a position where picture data has been deleted or added according to a user indication, and recording the edited play list onto the digital recording medium. This enables the reproducing apparatus to specify the position where the picture data has been deleted or added.

### [Construction of the Reproducing Apparatus]

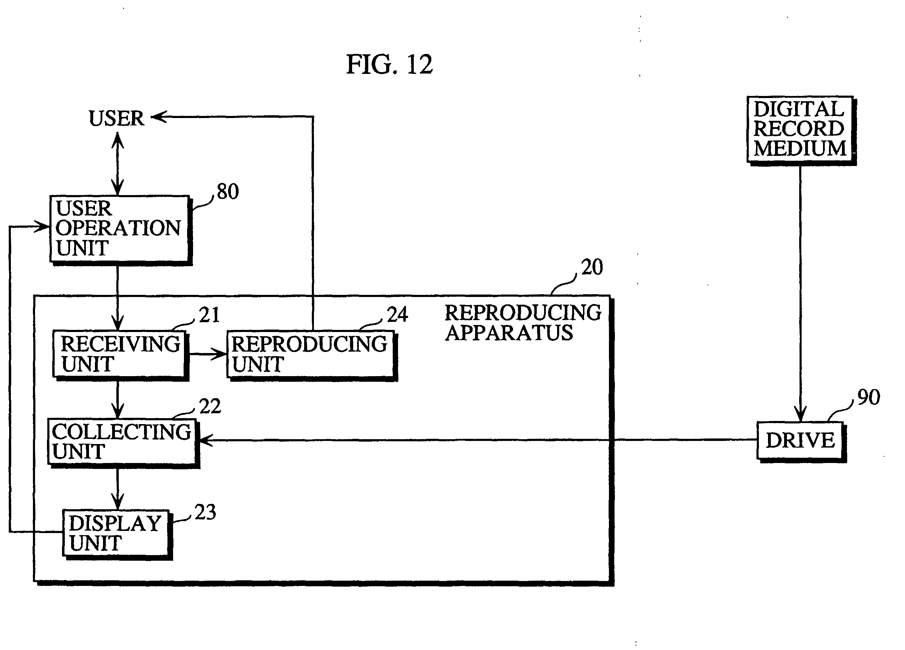

FIG. 12 shows the construction of the reproducing apparatus to which the first embodiment of the present invention relates.

The reproducing apparatus 20 shown in FIG. 12 is roughly composed of a receiving unit 21, a collecting unit 22, a display unit 23, and a reproducing unit 24.

Note that FIG. 12 also shows the user operation unit 80 and the drive 90 as in FIG. 5 which illustrates the editing apparatus 10.

The receiving unit 21 receives various indications from the user via the user operation unit 80. As one example, the receiving unit 21 receives an indication to reproduce a specific scene.

The collecting unit 22 collects scene information featuring each scene, in the reproduction order defined by the play list, each scene being separated by an EP that marks a position where non-destructive video editing has been performed according to a user indication.

As one example, the scene information may include picture data of one picture to be reproduced in each scene, or reproduction control information for each scene.

Here, the reproduction control information may include a UD_PGCI number, a reproduction start cell number, either of a reproduction start position time code or a still picture number, a reproduction end cell number, and either of a reproduction end position time code or a still picture number.

Here, a total reproduction duration of each scene may be calculated using the reproduction control information.

The total reproduction duration of a scene that includes only a movie can be calculated simply using the expression: reproduction end time-reproduction start time.

The total reproduction duration of a scene that includes a still picture can be usually calculated based on a still picture reproduction duration (STILL_TIME) that is common to a whole disc. The still picture reproduction duration (STILL_TIME) is included in the IFO file. In a case where the still picture is with an audio, however, the total reproduction duration of the scene is calculated based on the length of the audio. The audio includes an original audio and an after-recording audio. Accordingly, the calculation may be performed based on the currently selected audio, or either of the original audio and the after-recording audio, which can be feely chosen. Alternatively, the reproduction duration of the still picture may be regarded as zero in the calculation.

For a counter display during reproduction of a still picture, a counter part may display a character string indicating that a still picture is being displayed, or the counter may suspend counting up when display of a still picture starts after playback of a movie. In this way, the inconsistency in its display can be avoided.

The display unit 23 displays the scene information collected by the collecting unit 22 in the form that can be recognized by the user.

One example of the form that can be recognized by the user is a thumbnail image display where picture data of each scene collected by the collecting unit 22 is contracted and displayed as a still picture on a monitor. As another example, the total reproduction duration of each scene may be displayed on a screen. Also, an audio that corresponds to the scene information may be outputted by a speaker.

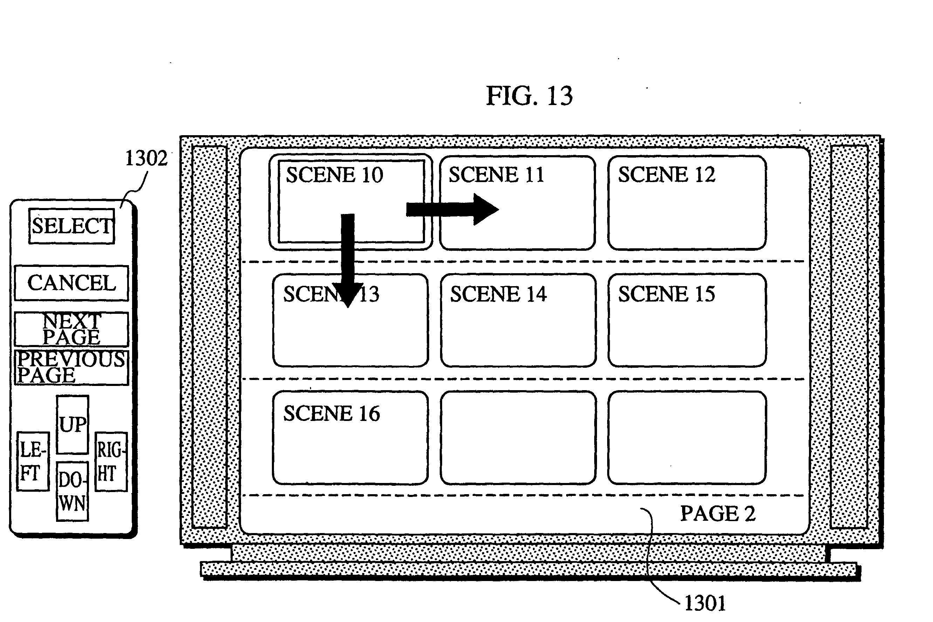

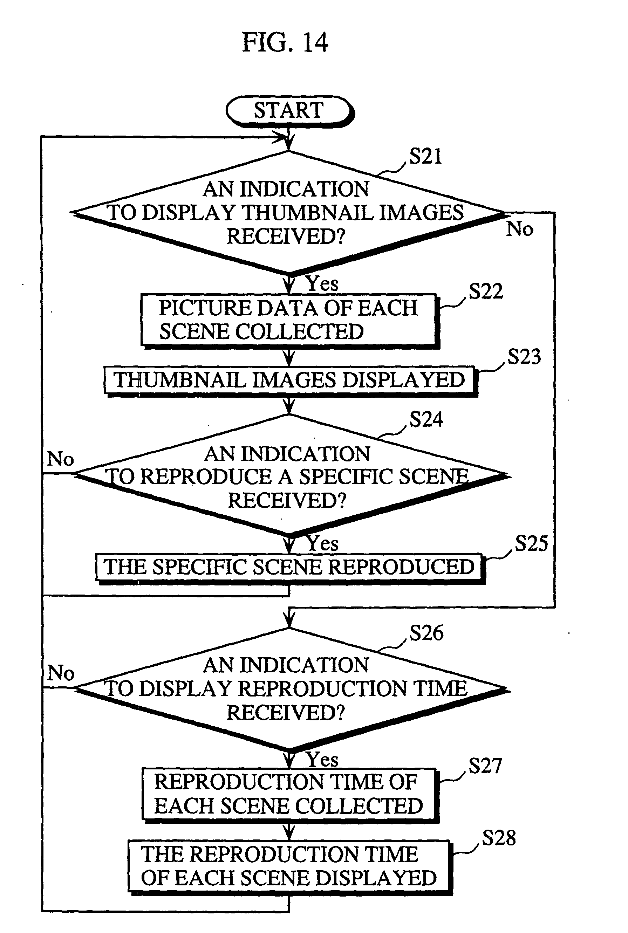

FIG. 13 shows one example of a thumbnail image display and one example method with which the user selects a desired scene to give a reproduction indication for the desired scene.

In FIG. 13, a display screen 1301 indicates a state where scenes 10 through 16 are displayed as thumbnail images . Scene 10 is presently active as displayed with a highlighted frame. In the figure, a right arrow and a down arrow each indicates a direction to which the highlighted frame can be moved.

Here, still pictures of nine scenes can be displayed on one screen. When there are more than nine scenes, pages can be switched using a button showing "next page" and a button showing "previous page" provided on a remote controller 1302, so that the scenes can be scrolled in units of nine scenes.

The user can switch pages using the button showing "next page" and the button showing "previous page" to set a desired scene active, and presses a button showing "select", so that the desired scene can be selected.

It should be noted that a number of scenes displayed on one screen may be less or more. Also, the scenes may be scrolled in units of one scene, instead of nine scenes.

The reproducing unit 24 reproduces a specific scene based on a reproduction indication received by the receiving unit 21.

### [Operations of the Reproducing Apparatus]

FIG . 14 is a flowchart showing procedures of a thumbnail image display operation and a reproduction duration display operation performed by the reproducing apparatus 20 relating to the first embodiment of the present invention.
(1) The receiving unit 21 waits for a user indication of a thumbnail image display (step S21).
(2) The collecting unit 22 collects picture data of one picture to be reproduced in each scene (step S22).
(3) The display unit 23 displays the collected picture data of one picture to be reproduced in each scene as a thumbnail image (step S23).
(4) The receiving unit 21 waits for a reproduction indication of a specific scene via the user operation unit 80 from the user (step S24). Here, the user refers to the displayed thumbnail images to select a desired scene.
(5) The reproducing unit 24 reproduces the desired scene based on the reproduction indication received by the receiving unit 21 (step S25).
(6) The receiving unit 21 waits for an indication to display a reproduction duration from the user (step S26).
(7) The collecting unit 22 collects the reproduction duration of each scene (step S27).
(8) The display unit 23 displays the reproduction duration of each scene collected by the collecting unit 22 (step S28).

It should be noted that a scene to be deleted may also be selected using the thumbnail image display and the scene selection method described above. The reproduction duration of each scene displayed as described above may be referred to in editing.

As described above, the reproducing apparatus relating to the first embodiment of the present invention is capable of specifying a position where non-destructive video editing has been performed according to a user indication, using an EP recorded on a recording medium. This realizes the various functions of the reproducing apparatus and the editing apparatus, such as reproduction and re-editing, in units of scenes that are separated by each EP.

### (Second Embodiment)

### [Overall Construction]

In the second embodiment of the present invention, when a video data material is partially deleted after a play list is generated through non-destructive video editing as described in the first embodiment, if an EP that marks a position where non-destructive video editing has been performed according to a user indication had been attached to the deleted part of the play list, an EP is again attached to the play list.

### [Construction of the Editing Apparatus]

As a method of indicating a partial deletion, a method of directly indicating a partial deletion of a video stream, a method of editing a program, and a method of editing a play list can be considered.

The video stream here indicates picture data recorded on the digital recording medium.

With the method of directly indicating a partial deletion of the video stream, a program and play lists that refer to the deletion part of the video stream should be modified.

With the method of editing the program, a partial deletion of the program directly indicates a partial deletion of the video stream. Therefore, the video stream should be partially deleted, with the play list having to be modified as well.

With the method of editing the play list, the original program remains intact although the play list has been modified. Therefore, the video stream is usually not deleted. Note that the video stream may be partially deleted and the program may be modified with the method of editing the play list.

The following describes the case where the play list is modified with the method of editing the program as one example.

FIG . 15 shows the construction of the editing apparatus to which the second embodiment of the present invention relates.

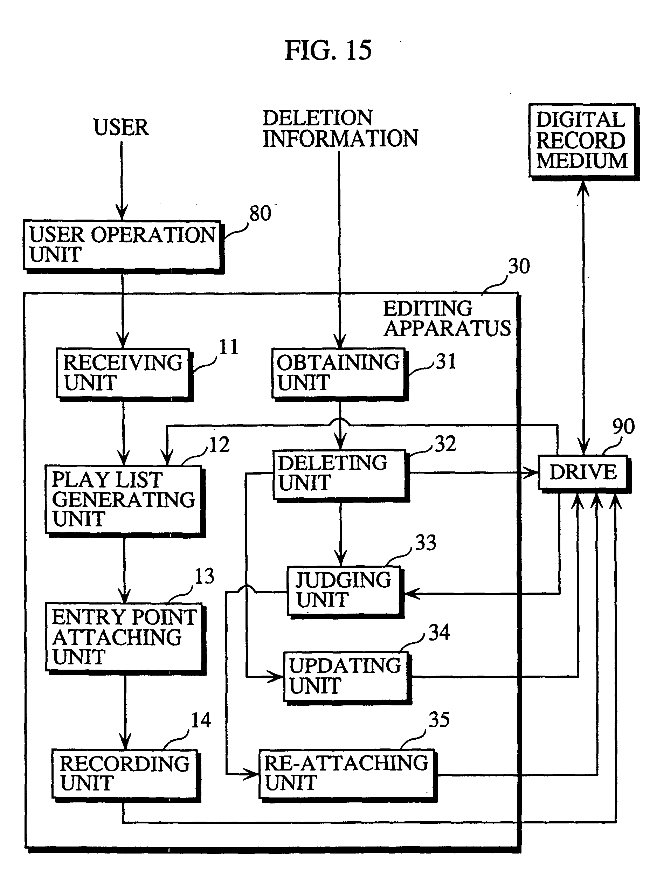

The editing apparatus 30 shown in FIG. 15 is roughly composed of a receiving unit 11, a play list generating unit 12, an entry point attaching unit 13, a recording unit 14, an obtaining unit 31, a deleting unit 32, a judging unit 33, an updating unit 34, and a re-attaching unit 35.

FIG. 15 also shows a user operation unit 80 and a drive 90.

In FIG. 15, components that have the same functions as the components shown in FIG. 5 have been given the same reference numerals as before, and are not explained in the present embodiment.

The obtaining unit 31 obtains deletion information that specifies picture data to be deleted from the digital recording medium.

Here, a part of a program to be deleted is specified by the user.

The deleting unit 32 deletes the picture data specified by the deletion information obtained by the obtaining unit 31, from the digital recording medium via the drive 90.

To be more specific, a part of the TMAP and a part of the VOBs that correspond to the deletion part of the program are deleted.

The judging unit 33 judges whether an EP that marks a position where non-destructive video editing has been performed according to a user's indication is attached to a part of the play list corresponding to the picture data deleted by the deleting unit 32.

The updating unit 34 deletes the part that corresponds to the picture data deleted by the deleting unit 32 from the program and the play list.

When the judging unit 33 judges that the EP that marks a position where non-destructive video editing has been performed is attached to the part of the play list, the re-attaching unit 35 attaches an EP to a position where the picture data has been deleted.

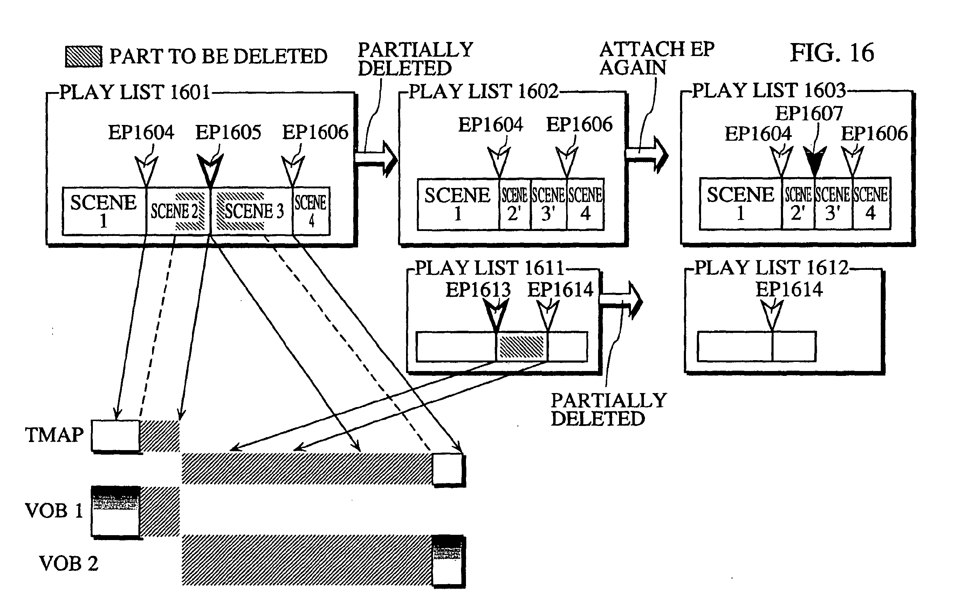

Fig. 16 schematically shows one example of re-editing of a play list 1601 and a play list 1611 required when picture data is deleted from a program.

It is assumed that EP1604 that indicates a seam between SCENE 1 and SCENE 2, EP1605 that indicates a seam between SCENE 2 and SCENE 3, and EP1606 that indicates a seam between SCENE 3 and SCENE 4 are attached to the play list 1601.

In the example of the play list 1601 shown in FIG. 16, the obtaining unit 31 obtains deletion information that indicates to delete a shaded part in the TMAP and the VOBs. The deleting unit 32 deletes the shaded part specified by the deletion information from the digital recording medium. The judging unit 33 judges that EP1605 that indicates the seam between the scenes is attached to a part corresponding to the picture data in the play list 1601. The updating unit 34 deletes the part corresponding to the picture data deleted by the deleting unit 32 from the play list (to generate the play list 1602). The re-attaching unit attaches EP1607 to the position where the picture data has been deleted (to generate the play list 1603).

Here, it is assumed that EP1613 that marks the seam between SCENE 1 and SCENE 2 and EP1614 that marks the seam between SCENE 2 and SCENE 3 are attached to the play list 1611.

In the example of the play list 1611 shown in FIG. 16, the obtaining unit 31 obtains deletion information that indicates to delete a shaded part in the TMAP and the VOBs. The deleting unit 32 deletes the shaded part specified by the deletion information from the digital recording medium. The judging unit 33 judges that EP1605 that indicates the seam between the scenes is not attached to a part corresponding to the picture data in the play list 1611. The updating unit 34 deletes the part corresponding to the picture data deleted by the deleting unit 32, from the play list (to generate the play list 1612). Here, EP1613 is deleted when SCENE 2 is deleted.

### [Operations of the Editing Apparatus]

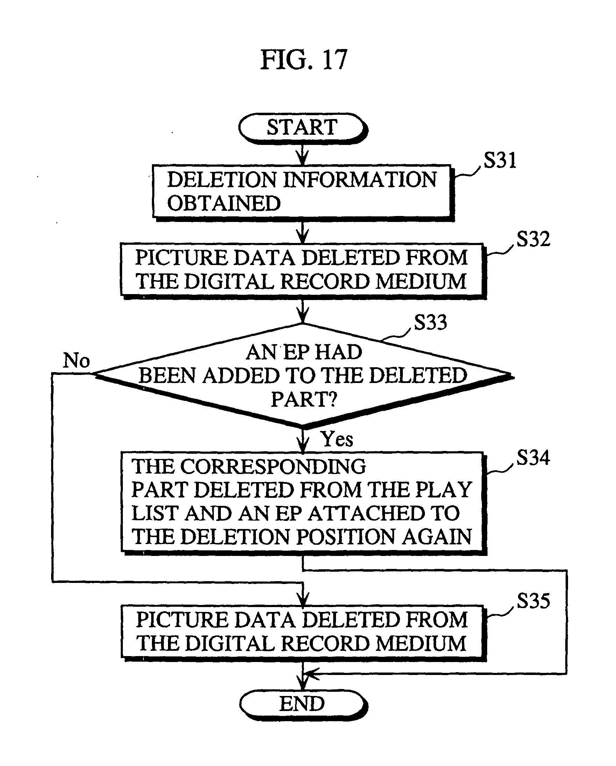

FIG. 17 is a flowchart showing a procedure for updating a play list required by a partial deletion of a video data material, performed by the editing apparatus 30 relating to the second embodiment of the present invention.
(1) The obtaining unit 31 obtains deletion information that specifies picture data to be deleted from the digital recording medium (step S31).
(2) The deleting unit 32 deletes the picture data specified by the deletion information obtained by the obtaining unit 31 from the digital recording medium (step S32).
(3) The judging unit 33 judges whether an EP that marks a position where non-destructive video editing has been performed according to a user's indication is attached to a part corresponding to the picture data deleted by the deleting unit 32 in the play list (step S33).
(4) When the judging unit 33 judges that the EP is attached to the part, the updating unit 34 deletes the part corresponding to the picture data deleted by the deleting unit 32, from the play list. The re-attaching unit 35 attaches an EP to the position where the picture data has been deleted in the play list, and ends the processing (step S34).
(5) When the judging unit 33 judges that the EP is not attached to the part, the updating unit 34 deletes the part corresponding to the picture data deleted by the deleting unit 32 from the play list, and ends the processing (step S35).

### [Construction of the Reproducing Apparatus]

An explanation of the construction of the reproducing apparatus in the present embodiment is omitted here since it is the same as in the first embodiment.

### [Operations of the Reproducing Apparatus]

An explanation of the operations of the reproducing apparatus in the present invention is omitted here since it is the same as in the first embodiment.

As described above, the editing apparatus relating to the second embodiment of the present invention is capable of properly attaching an EP that marks a position where non-destructive video editing has been performed according to a user's indication, when updating a play list, which is required by a partial deletion of a video data material.

It should be noted that the explanation has been given taking a movie for example, however, the same procedure for attaching an EP can also be employed in the case of a still picture.

In the case of a movie, EP_PTM that is an attribute value of an EP is used as data to indicate a section. Each EP includes EP_PTM, and the judgment of various conditions is made by comparing EP_PTMs. In the case of a still picture, S_VOB_ENTN (the ordinal number of a still picture) that is an attribute value of an EP is used as data to indicate a section. Each EP includes S_VOB_ENTN, and the judgment of various conditions is made by comparing S_VOB_ENTNs.

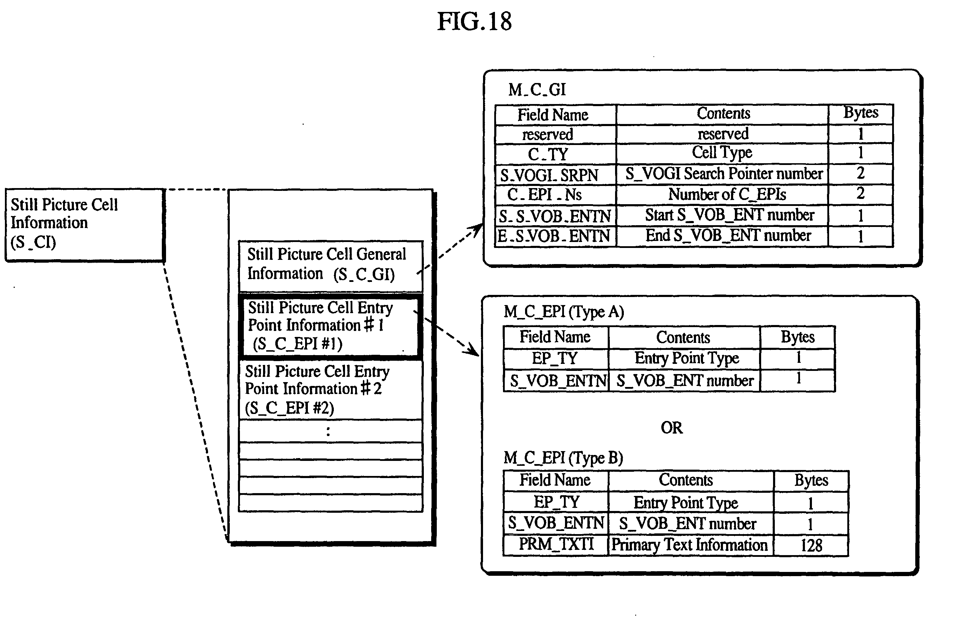

FIG. 18 schematically shows a data structure of cell information for a still picture (Still_Picture_Cell_Information).

The cell information for a still picture includes general information for a still picture cell (Still_Picture_Cell_general_Information) and EP information for a still picture cell (Still_Picture_Cell_Entry_Point_Information). The generatl information for a still picture cell includes:
S_VOGI_SRPN
C_EPI_Ns
S_S_VOB_ENTN
E_S_VOB_ENTN

The data structure of an EP for a still picture includes two types: "S_C_EPI (Type A)" (hereafter simply referred to as "Type "A"); and "S_C_EPI (Type B)" (hereafter simply referred to as "Type B").

Type A data structure is used when no Primary Text Information exists. Type B data structure is used when Primary Text Information exists.

Type A includes "EP_TY" and "S_VOB_ENTN".

Type B includes "EP_TY", "S_VOB_ENTN", and "PRM_TXI".

EP_TY describes EP Type of this Entry Point..

S_VOB_ENTN describes the S_VOB_ENT (Still Picture VOB Entry) number for this Entry Point.

PRM_TXTI describes the Primary Text Information for this Entry Point.

Note that when an EP is utilized for other purposes, an EP to mark a position where non-destructive video editing has been performed according to a user's indication and an EP for the other purposes may be differentiated during reproduction or re-editing in the following arrangement. The former EP is always attached to a seam between cells, while the latter EP is not attached to a seam between cells.

Alternatively, an EP of type B may be used as an EP to mark a position where non-destructive video editing has been performed according to a user's indication, so that its text region can include a message showing "non-destructive video editing has been performed according to a user's indication". An EP of type B may also be used as an EP for the other purposes although its text region does not include such a message, or instead, an EP of type A may be used as an EP for the other purposes. In this way, an EP to mark a position where non-destructive video editing has been performed according to a user's indication and an EP for the other purposes can be differentiated during reproduction or re-editing.

It should be noted that a digital recording medium edited by the editing apparatus of the embodiments of the present invention can solely be distributed and commercialized.

Also, a program that makes a computer realize the operations described in the embodiments of the present invention may be recorded on a computer-readable digital recording medium and may be distributed and commercialized. Also, such a program may be transferred via network and commercialized. Here, the computer-readable digital recording medium can be of any type. Examples of the computer-readable digital recording medium are removable recording media, such as a floppy disc, a CD-R, a CD-RW, an MO, a DVD-R, a DVD-RW, a DVD-RAM, and a memory card, or fixed recording media, such as a hard disc and a semiconductor memory.

Also, the drive in the embodiments of the present invention can be of any type as long as it allows data recorded on the digital recording medium such as a video stream and management information to be edited.

The present invention may also be realized by a unified setup of a digital recording medium and a drive, such as a DVD recorder, or may be realized by an editing system and a drive provided separately.

As one example, a video stream recorded on a recording medium, such as a hard disc or the like, connected to an apparatus, such as an Internet server, located at a distant place, such as a broadcasting station, may be edited by each user via a communication means such as the Internet.

Also, the editing system and the drive may be connected locally using ATAPI bus or USB bus, or connected via a cable network or a wireless network.

### Industrial Application

The present invention can be applied to a DVD recorder that is used for recording and editing picture data such as a television program or a raw video, or can also be applied to a DVD player that reproduces the recorded and edited picture data. With the application of the present invention, a position where editing has intentionally been performed by a user can easily be specified during reproduction or re-editing, and therefore, such a position can be referred to in providing various services for the user.

Also, the present invention can be applied not only to a DVD but also to any recording medium.

## Claims

1. An editing apparatus that edits original management information including an original reproduction procedure of a video stream, the video stream having a plurality of sets of picture data, the video stream and the original management information being prerecorded on a digital recording medium, the editing apparatus comprising:
a receiving unit operable to receive, from a user, edit information that specifies a part the user desires to edit in the original reproduction procedure;
a generating unit operable to (a) generate, based on the original reproduction procedure, a new reproduction procedure in which the part specified by the edit information has been edited, and (b) generate new management information including the new reproduction procedure;
an attaching unit operable to attach entry information to the new management information, the entry information showing a point in the new reproduction procedure at which the editing has been performed according to the user's intention; and
a recording unit operable to record the new management information to which the entry information has been attached, onto the digital recording medium.

2. The editing apparatus of Claim 1
wherein the receiving unit receives the edit information that specifies a set of picture data the user desires to delete by editing, out of the plurality of sets of picture data shown by the original reproduction procedure,
the generating unit generates the new reproduction procedure in which a reproduction instruction to reproduce the set of picture data specified by the edit information has been deleted from the original reproduction procedure, and
the attaching unit attaches, to the new management information, the entry information showing the point in the new reproduction procedure at which the reproduction instruction has been deleted according to the user's intention.

3. The editing apparatus of Claim 1
wherein the receiving unit receives the edit information that specifies (a) a set of picture data the user desires to add by editing and (b) a position in the original reproduction procedure at which the set of picture data is to be added;
the generating unit generates the new reproduction procedure in which a reproduction instruction to reproduce the set of picture data specified by the edit information has been added to the reproduction procedure at the position specified by the edit information; and
the attaching unit attaches, to the new management information, the entry information showing the point in the new reproduction procedure at which the reproduction instruction has been added according to the user's intention .

4. The editing apparatus of Claim 1, further comprising:
an obtaining unit operable to obtain deletion information that specifies a set of picture data the user desires to delete from the digital recording medium;
a deleting unit operable to delete the set of picture data specified by the deletion information from the digital recording medium;
a judging unit operable to judge whether entry information is attached to a part of the original management information, the part corresponding to the deleted set of picture data;
an updating unit operable to delete a reproduction instruction to reproduce the deleted set of picture data, from the original reproduction procedure, to update the original management information; and
a re-attaching unit operable to re-attach the entry information to the updated management information when a judgment result of the judging unit is affirmative, the entry information showing a point in the reproduction procedure included in the updated management information at which the reproduction instruction has been deleted.

5. The editing apparatus of Claim 1,
wherein the video stream is recorded on the digital recording medium in units of objects, each object being composed of sets of still picture data that have a common condition required for reproduction, the sets of still picture data respectively being given numbers,
the original reproduction procedure included in the original management information is indicated by at least one cell, the cell being assigned to a range within an object and showing (a) an identifier of the object and (b) numbers of a first set of still picture data and a last set of still picture data in the assigned range of the object,
the generating unit generates the new reproduction procedure in which the cell has been divided by the point at which the editing had been performed, and
the attaching unit attaches the entry information to the new management information, the entry information showing the point in the new reproduction procedure at which the cell has been divided.

6. The editing apparatus of Claim 1,
wherein the video stream is recorded on the digital recording medium in units of objects, each object being composed of sets of picture data that have been sequentially recorded and have a common condition required for reproduction,
the original reproduction procedure included in the original management information is indicated by at least one cell, the cell being assigned to a range within an object and showing (a) an identifier of the object and (b) a start time and an end time of sequent sets of picture data in the assigned range of the object,
the generating unit generates the new reproduction procedure in which the cell has been divided by the point where the editing had been performed, and
the attaching unit attaches the entry information to the new management information, the entry information showing the point at which the cell has been divided.

7. The editing apparatus of Claim 1,
wherein the entry information has a text region, and
the attaching unit attaches, to the new management information, the entry information whose text region contains a message indicating that the editing has been performed on the point according to the user's intention.

8. A reproducing apparatus that reproduces a video stream having a plurality of sets of picture data, based on management information including a reproduction procedure of the video stream, the video stream and the management information being prerecorded on a digital recording medium, entry information being attached to the management information, the entry information showing a point at which editing has been performed according to a user's intention, the reproducing apparatus comprising:
a collecting unit operable to collect sets of section information featuring sections in the reproduction procedure included in the management information, each section being separated by the entry information attached to the management information; and
a display unit operable to display the collected sets of section information in a form that can be recognized by the user.

9. The reproducing apparatus of Claim 8, further comprising:
a receiving unit operable to receive a user' s intention to reproduce a section, the section being selected by the user with reference to the displayed sets of section information; and
a reproducing unit operable to reproduce the selected section based on the received user's intention.

10. The reproducing apparatus of Claim 8,
wherein the collecting unit collects a set of picture data of one picture to be reproduced in each section as a set of section information, and
the display unit displays the collected set of picture data of each section as a thumbnail image.

11. The reproducing apparatus of Claim 8,
wherein the collecting unit collects a reproduction duration of each section as a set of section information, and
the display unit displays the collected reproduction duration of each section on a screen.

12. The reproduction apparatus of Claim 8,
wherein the video stream is recorded on the digital recording media in units of objects, each object being composed of sets of still picture data that have a common condition required for reproduction, the sets of still picture data respectively being given numbers,
the reproduction procedure included in the management information is indicated by at least one cell, the cell being assigned to a range within an object and showing (a) an identifier of the object and (b) numbers of a first set of still picture data and a last set of still picture data in the assigned range of the object,
unintentional entry information is attached to the management information, the unintentional entry information not showing a point where editing has been performed according to a user's intention, a point shown by the unintentional entry information not matching a seam of a cell, and
the collecting unit collects the sets of section information featuring the sections in the reproduction procedure, each section being separated by the entry information that shows a point matching a seam of a cell.

13. The reproduction apparatus of Claim 8,
wherein the video stream is recorded on the digital recording medium in units of objects, each object being composed of sets of picture data that have been sequentially recorded and have a common condition required for reproduction,
the reproduction procedure included in the management information is indicated by at least one cell, the cell being assigned to a range within an object and showing (a) an identifier of the object and (b) a start time and an end time of sequent sets of picture data in the assigned range of the object,
unintentional entry information is attached to the management information, the unintentional entry information not showing a point where editing has been performed according to a user's intention, a point shown by the entry information not matching a seam of a cell, and
the collecting unit collects the sets of section information featuring the sections in the reproduction procedure, each section being separated by the entry information that shows a point matching a seam of a cell.

14. The reproducing apparatus of Claim 8,
wherein unintentional entry information is attached to the management information, the unintentional entry information not showing a point where editing has been performed according to a user's intention,
the entry information that shows a point where editing has been performed according to a user's intention includes a text region that contains a message indicating that the editing has been performed on the point according to the user's intention, and
the collecting unit collects the sets of section information featuring the sections in the reproduction procedure included in the management information, each section being separated by the entry information whose text region contains the message indicating that the editing has been performed on the point according to the user's intention.

15. An editing method for editing original management information including an original reproduction procedure of a video stream, the video stream having a plurality of sets of picture data, the video stream and the original management information being prerecorded on a digital recording medium, the editing method comprising:
a receiving step for receiving, from a user, edit information that specifies a part the user desires to edit in the original reproduction procedure;
a generating step for (a) generating, based on the original reproduction procedure, a new reproduction procedure in which the part specified by the edit information has been edited, and (b) generating new management information including the new reproduction procedure;
an attaching step for attaching entry information to the new management information, the entry information showing a point in the new reproduction procedure at which the editing has been performed according to the user's intention; and
a recording step for recording the new management information to which the entry information has been attached, onto the digital recording medium.

16. A reproducing method for reproducing a video stream having a plurality of sets of picture data, based on management information including a reproduction procedure of the video stream, the video stream and the management information being prerecorded on a digital recordingmedium, entry information being attached to the management information, the entry information showing a point at which editing has been performed according to a user's intention, the reproducing method comprising:
a collecting step for collecting sets of section information featuring sections in the reproduction procedure included in the management information, each section being separated by the entry information attached to the management information; and
a display step for displaying the collected sets of section information in a form that can be recognized by the user.

17. An editing program for editing original management information including an original reproduction procedure of a video stream, the video stream having a plurality of sets of picture data, the video stream and the original management information being prerecorded on a digital recording medium, the editing program comprising:
a receiving step for receiving, from a user, edit information that specifies a part the user desires to edit in the original reproduction procedure;
a generating step for (a) generating, based on the original reproduction procedure, a new reproduction procedure in which the part specified by the edit information has been edited, and (b) generating new management information including the new reproduction procedure;
an attaching step for attaching entry information to the new management information, the entry information showing a point in the new reproduction procedure at which the editing has been performed according to the user's intention; and
a recording step for recording the new management information to which the entry information has been attached, onto the digital recording medium.

18. A reproducing program for reproducing a video stream having a plurality of sets of picture data, based on management information including a reproduction procedure of the video stream, the video stream and the management information being prerecorded on a digital recording medium, entry information being attached to the management information, the entry information showing a point at which editing has been performed according to a user's intention, the reproducing program comprising:
a collecting step for collecting sets of section information featuring sections in the reproduction procedure included in the management information, each section being separated by the entry information attached to the management information; and
a display step for displaying the collected sets of section information in a form that can be recognized by the user.

19. A digital recording medium including a region in which a video stream and management information are recorded, the video stream including a plurality of sets of picture data, the management information including a reproduction procedure of the video stream, the management information comprising
entry information showing a point in the reproduction procedure at which editing has been performed according to a user's intention.

20. The digital recording medium of Claim 19, wherein
the video stream is recorded on the digital recording medium in units of objects, each object being composed of sets of still picture data that have a common condition required for reproduction, the sets of still picture data being given numbers,
the reproduction procedure included in the management information is indicated by at least one cell, the cell being assigned to a range within an object and showing (a) an identifier of the object and (b) numbers of a first set of still picture data and a last set of still picture data in the assigned range of the object, and
the entry information that shows a point at which the editing has been performed according to the user's intention matches a seam of a cell.

21. The digital recording medium of Claim 19,
the video stream is recorded on the digital recording medium in units of objects, each object being composed of sets of picture data that have sequentially been recorded and have a common condition required for reproduction,
the reproduction procedure included in the management information is indicated by at least one cell, the cell being assigned to a range within an object and showing (a) an identifier of the object and (b) a first time and an end time of sets of picture data in the assigned range of the object, and
the entry information that shows a point at which the editing has been performed according to the user's intention matches a seam of a cell.

22. The digital recording medium of Claim 21,
wherein unintentional entry information is attached to the management information, the unintentional entry information not showing a point at which editing has been performed according to a user's intention, a point shown by the entry information not matching a seam of a cell.

23. The digital recording medium of Claim 19,
wherein the entry information showing the point in the reproduction procedure at which the editing has been performed according to the user's intention includes a text region that contains a message indicating that the editing has been performed on the point according to the user's intention.

24. The digital recording medium of Claim 23,
wherein unintentional entry information is attached to the management information, the unintentional entry information not showing a point in the reproduction procedure at which editing has been preformed according to a user's intention, the unintentional entry information either (a) not including a text region or (b) including a text region that does not contain a message indicating that the editing has been performed on the point according to the user's intention.
